# EUROPEAN PATENT APPLICATION

(11) **EP 4 116 274 A1**
(43) Date of publication of application: **11.01.2023**
(21) Application number: 22183666.1
(22) Date of filing: 07.07.2022
(51) Int. Cl.: C04B 28/02, C04B 18/16

(54) **LARGE SCALE CARBONATION OF CONCRETE WASTE**

(30) Priority: 07.07.2021 EP 21184181
(71) Applicant: zirkulit AG, 8302 Kloten (CH)
(72) Inventor: MARTINOLA, Giovanni, 8107 Buchs (CH); STÄHLI, Patrick, 8903 Birmensdorf (CH)
(74) Representative: Pestalozzi, Deborah

(57) **Abstract**

The present invention concerns a method for recycling concrete aggregates from demolition waste (31), the method comprising the following steps: providing an individual fraction (11a, 11b, 11c, 11d) of concrete aggregates obtained from concrete waste (31) from a demolition site (1) with a defined grain size distribution d/D, measuring and adjusting a water content in said fraction of the concrete aggregates, introducing a defined amount of CO₂ (21) into a reactor vessel (5, 5', 5", 5‴), introducing said individual fraction (11a) of concrete aggregates into the reactor vessel pre-filled with CO₂ separately from other fractions (11b, 11c, 11d); controlled carbonation of the individual fraction (11a, 11b, 11c, 11d) of concrete aggregates in the reactor vessel resulting in a carbonated fraction (11) of concrete aggregates; removal of the carbonated fraction of concrete aggregates from the reactor vessel for subsequent use in the production of a new concrete composition (16).

## Description

### TECHNICAL FIELD

The present invention relates to a method for the treatment of recycled concrete aggregates from demolition waste and thus for the recycling of granulated concrete material as well as to recycled concrete aggregates produced by such a method. The invention furthermore concerns a facility for the treatment of such granulated concrete materials and thus for carrying out the inventive method.

### PRIOR ART

Worldwide, billions of tons of sand and gravel are used yearly alone for house construction purposes. These raw materials are mainly extracted from quarries, i.e. from natural sources. Meanwhile, sand and gravel resulting from the demolition of buildings are landfilled and thus disposed of after their first life cycle. As many houses are still built with primary materials only, it is desirable to maximize the usage of secondary raw materials where possible. The fact that valuable and limited raw materials are used only once and flow into the waste stream after a short life cycle results in a drastic impact on our environment.

Sand and gravel are raw materials that can be kept in the cycle for generations if treated and processed properly and carefully. To ensure that such valuable raw materials will effectively remain in the material cycle over many life cycles, high-quality processing of demolition derived concrete is of utmost importance. Only if the quality of the building material, in this case concrete, can be kept high despite the use of secondary raw materials, and thus no down-cycling takes place, can the same concrete be used for construction purposes over generations. Therefore, the circularity of construction materials, especially concrete, is essential for a sustainable future.

The extraction of secondary raw materials takes place for example where old buildings are dismantled, when soils are washed or when sand and gravel are extracted during excavation for construction purposes. Especially, the construction waste from dismantling is sorted out and old concrete is treated so that it can be re-used as an aggregate for the production of concrete that is poured during the construction of new buildings and infrastructures.

Another advantage of concrete recycling is its potential for CO₂ storage. CO₂ can be stored in broken recycled concrete, as the used cement normally is not carbonized to a degree of 100% in concrete. By using a CO₂ storing technology, 5 to 55 kg of CO₂ can be stored per ton of recycled concrete aggregates (RCA).

Methods for the production of recycled concrete aggregates are well known in the prior art. EP 2 978 724 discloses a process for the recycling of pulverized demolition waste by carbonation, with the goal to remove hardened mineral cement paste from the concrete aggregates. EP 3 744 700 discloses a process for grinding concrete demolition waste derived concrete fines in the presence of CO₂ and the use of the recycled carbonated concrete fines as hydraulically active cement-containing binders. However, this process cannot be used to carbonate conventional fractions having large grain size distributions as used for concrete production. Other methods using RCA and storing CO₂ by sequestration mainly focus on CO₂ storage, thus neglecting the aspect of resource conservation and/or material-specific requirements of concrete. The existing methods for carbonated RCA production thus either produce a low-quality concrete, which is either mechanically less durable, requiring additional cement usage to meet the same mechanical requirements, or, in order to reach the same mechanical requirements, lower amounts of RCA are used. Some of these prior art methods paradoxically result in even higher CO₂-emissions, as either no CO₂-reduced cement at all is used to produce the RCA containing concrete, or higher amounts of CO₂-reduced cement is used.

While methods according to the prior art are carried out in much smaller gassing plants, e.g. in 20 or 40 feet containers, only limited quantities of RCA of about 20-30 tons per batch can be treated. As a result, only limited quantities of carbonated RCA material, i.e. carbonated concrete aggregates (CCA) are available. These quantities are insufficient to supply large construction sites.

Furthermore, the methods according to the prior art involve uncontrolled CO₂ losses, as the carbonation system is open, with no proof of what is actually bound in the aggregates and what is lost to the atmosphere. This also encompasses hazards for workers involved in the process.

Furthermore, according to the prior art, RCA fractions with rather large grain size distributions, such as 0-16 mm or 0-32 mm are carbonated and used for new concrete production. This encompasses a risk of segregation of the RCA material in the silo. This is dangerous, because no constant, reliable and robust concrete production can be ensured due to the large variations in grain size distribution. This makes the production of concretes with RCA quantities of more than 70% impossible.

Furthermore, in the methods according to the prior art, the carbonation process is triggered and left to its own fate. Due to the exothermic nature of the reaction, this lack of control of process parameters can be deleterious to the material, as no adjustment of the temperature is possible. There is no disclosure in the prior art about any effective temperature or humidity control during carbonation, which is essential for a high RCA quality.

Concrete is definitively a sustainable material because it can be 100% recycled. The achievement of this goal requires profound knowledge on how to produce and treat RCA, i.e. how it can be significantly improved and in which way it can be used efficiently and at a very high dosage in a concrete mix.

The present application concerns the processing of concrete demolition waste in order for it to be transformed into high quality RCA and hence be used successfully to produce high quality concrete. High quality processing of demolition waste derived concrete can allow for an upcycled product that can enter another life cycle as an aggregate for "new" concrete. The "new" concrete shall contain a maximum of RCA while fulfilling the two requirements of performance and sustainability: The concrete shall have the properties prescribed by the standards, allowing its unrestricted use, however, the concrete shall also have a minimal CO₂ impact, i.e. shall contain a minimal amount of cement, require minimal logistics and result in optimized resource-saving.

The desired improved method for recycling by carbonation of demolition waste derived concrete aggregates shall fulfill the following requirements:
i.) The process shall not compromise the quality of the concrete aggregates with respect to their concrete-specific characteristics, such as compressive strength and its module of elasticity. If the characteristics of the concrete granulate suffers under the recycling process, either no high quality concrete, i.e. structural concrete, can be produced, or the cement usage increases, thus increasing the CO₂-footprint.
ii.) The process shall allow a maximum storage of CO₂. If an additional process step is added during concrete production, it is important that this step is as efficient as possible. The CO₂ storage potential must be exploited, as it cannot be improved later on. Once new concrete has been produced again, it's CO₂ storage capacity cannot be further increased.
iii.) The process shall be feasible in large scale applications. A building needs a great amount of concrete, depending on its size. The concrete production process thus needs to be "scalable". Lab-scale carbonation processes according to the prior art are not useful in practice, as the output of carbonated granulates is too small.
iv.) The process shall be environmentally friendly. The energy consumption shall be minimal and as little CO₂ as possible shall be wasted. Otherwise, the CO₂-footprint is not reduced - the contrary, it is even increased.
v.) The process shall be secure. Working with CO₂ is dangerous. CO₂ is heavier than gas and thus accumulates in depressions. In case of CO₂ losses or in case of residual CO₂ at the end of a process, the workers involved are exposed to a high risk.

These requirements, let alone in their combination, are not fulfilled by the carbonation methods according to the prior art.

### SUMMARY OF THE INVENTION

The present invention thus aims at providing an improved method for the recycling of demolition waste derived concrete aggregates by sequestration of CO₂. It is a core of the invention to provide optimized and safe conditions for the carbonation of recycled concrete aggregates, and consequently to provide an improved method for the production of new concrete compositions containing recycled concrete aggregates, which displays a higher quality compared to such concrete compositions known from the prior art.

The present invention thus concerns a method for recycling concrete aggregates from demolition waste, comprising the following steps:
a.) providing an individual fraction of concrete aggregates obtained from a demolition site with a defined grain size distribution d/D (in mm) selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 2/64, 4/64, 8/64, 16/64, 20/64, 22/64, 32/64, and 64/128, wherein a fraction of any other grain size distribution suitable for concrete production according to EN 12620:2013 can also be used;
b.) introducing a defined amount of CO₂ into a reactor vessel, wherein the reactor vessel preferably is not artificially pressurized, but only is exposed to natural or standard atmospheric pressure (1 atm);
   The reactor vessel is preferably filled with CO₂ to at least 50%, preferably to 60-90%, most preferably to 70-85% of the reactor vessel volume prior to introduction of the respective fraction of concrete aggregates.
c.) introducing said individual fraction of concrete aggregates into the reactor vessel, i.e. preferably separately from other fractions of different grain size distributions; Preferably, step b.) has been carried out prior to step c.), i.e. the reactor vessel has been pre-filled with CO₂ so that the carbonation reaction can begin immediately upon/with the introduction of the material to be carbonated.
d.) controlled carbonation of the individual fraction of concrete aggregates in the reactor vessel, resulting in a carbonated fraction of concrete aggregates;
e.) removal of the carbonated fraction of concrete aggregates from the reactor vessel for subsequent use in new concrete production.

The concrete material is usually transported from a demolition site to a waste processing unit, where concrete waste is separated from other waste components. The concrete waste is then stored in a concrete block disposal, mostly in form of irregular concrete blocks, in order to shelter it from the weather. This disposal or storage site can be a large shelter or roof, under which the blocks are stored prior to their transport to a crushing site and possibly also a sieving site or unit for further processing. Preferably, the concrete waste blocks are left to dry under the shelter or roof, until they do not contain any visibly wet surfaces anymore. The reaction of carbon dioxide is slow in very dry concrete. On the other hand, in saturated concrete the moisture presents a barrier to the penetration of carbon dioxide. If necessary, water can be later added again to said fraction of concrete aggregates prior to step d.), such as by means of a sprinkler system.

Preferably, the provision of a fraction of concrete aggregates in above mentioned step a) comprises
- crushing of concrete material from the demolition site, thereby obtaining crushed concrete demolition material;
- and preferably sieving of the crushed concrete demolition material into different well defined fractions of concrete aggregates with different grain size distributions d/D.

The sieving step can be carried out after the crushing step and before the step of carbonation. This can ensure an especially small bandwidth of the fraction of RCA to be carbonated. However, in an alternative preferred embodiment, the carbonation can also take place with a comparatively larger fraction of crushed material, which is then only sieved into smaller fractions after the carbonation. The crushing step results in crushed concrete aggregates. The crushing maximizes the exposure of freshly produced surfaces on each particle to the CO₂ in the subsequent carbonation step.

The desired particle size distribution of the fractions should be controlled by the crushing- and sieving process. In case the concrete to be recycled contains foreign materials, a cleaning step is necessary. For best cleaning results, each fraction is separately cleaned in a windsifter. Good cleaning results can only be achieved if the bandwidth of the fraction passing through the windsifter is narrow enough. If the bandwidth of the fraction is too big, either the bigger impurities such as wood, plastic, gypsum, etc. cannot be blown out by the windsifter, or the windsifter must blow with such a force that the smaller concrete particles are blown out as well. This explains why a mobile recycling plant is not able to produce comparably high quality recycled concrete as a recycling facility according to the present invention.

Prior to step d.), a water content of the material to be carbonated, i.e. dry weight basis moisture content, in said fraction of the concrete aggregates can be adjusted to a desired level for the respective fraction in order to provide optimal conditions for the carbonation process. This can be achieved by drying or by addition of water, if necessary, until the desired water content is reached in said fraction of concrete aggregates; preferably to a water content of in the range of at the most 10%, more preferably in a range of 1-8 %, most preferably in a range of 2-7%. For example, for a fraction of sand having a grain size distribution of 0-4 mm, the desired water content is 5.0-7.0%, for a fraction having a grain size distribution of 4-8 mm the desired water content is 3-4%, for a fraction having a grain size distribution of 8-16 mm the desired water content is 2-3%, and for a fraction having a grain size distribution of 16-32 mm the desired water content is about 2%. Preferably the water content of the concrete material is adjusted prior to or during the crushing step, such as by means of a sprinkler system. Preferably, after crushing, the concrete material is sieved and the water content is measured by a sonde. If the water content of the crushed concrete material is too low, it is humidified, preferably by sprinkling it with water. With a desired water content, the crushed concrete material is humid, but not wet, i.e. ideally no water shall be present the surface, as water condensation is to be prevented. An excessive water content would reduce the initial reactivity of the material, which would result in a slower capturing of CO₂, and a waste of precious time.

According to a preferred embodiment of the present invention, the introduction of the fraction of concrete aggregates obtained in step a) into the reactor vessel in step c) is started within at the most 60 minutes, preferably within at the most 10 minutes, more preferably within at the most 5 minutes, most preferably within at the most 2 minutes of the step of crushing and possibly sieving.

In an alternative embodiment of the invention, step d.), i.e. the carbonation reaction, is carried out on the respective fraction of concrete aggregates simultaneously with the step of crushing and possibly also sieving. In other words, in this case, a crushing-/sieving unit could be integrated in the reactor vessel or the crushing-/sieving unit itself could serve as a reactor.

The CO₂ introduced into the reactor vessel in step b.) can be in liquid or gaseous form.

According to a further preferred embodiment of the present invention, in step b.) the CO₂ is introduced into the reactor vessel by injection, preferably through various different nozzles located at different heights along the reactor vessel. The CO₂ is preferably introduced into the reactor vessel or silo in a bottom region, i.e. from the bottom third of the reactor vessel height, or through the floor of the reactor, preferably by injection. In addition or alternatively, the CO₂ can be introduced into the reactor vessel in an upper region of the reactor vessel, such as from the upper third of the reactor vessel height, and/or from the side, e.g. through nozzles located in the reactor vessel wall. The introduction of the CO₂ preferably is measured by at least one flow meter and preferably controlled by at least one control valve.

According to a first preferred embodiment, the reactor vessel is a vertically disposed vessel, such as a silo, in which the RCA are carbonated. However, according to a second preferred embodiment, it is also possible to carry out the carbonation reaction in a horizontally disposed reactor vessel, such as in a rotating cylinder. The rotation of the reactor vessel, i.e. in this case the cylinder, allows the material to be revolved during the carbonation reaction, which increases the surface area of the RCA material exposed to the gas mixture contained in the reactor vessel. This can be especially advantageous in the case of sand, i.e. the fraction of small diameter particles with diameters of 0-4mm. The revolution of the material can also be carried out by a mixer or any other suitable device. In a silo, for example, the revolution of the material can be carried out by a vertical mixer with a mixing screw, i.e. a screw conveyor, or by a conveyor or lifting device equipped with shovels which scoop up material.

It is especially advantageous in terms of an ecological perspective if the CO₂ introduced into the reactor vessel in step b.) is derived from a regenerative source, preferably derived from a regenerative source located at a distance of at the most 30 km, preferably at the most 20 km from the reactor vessel, i.e. from the concrete recycling facility, in order to minimize costs, energy and the eco-impact spent for transport.

In a further preferred embodiment of the present invention, the CO₂ introduced into the reactor vessel in step b.) is introduced, in terms of amount and/or flow rate, in dependency of a temperature measured in the reactor vessel, wherein the temperature preferably is measured at at least one of the following locations: in a gas mixture contained in an upper region, i.e. upper third of the silo, in a respective fraction of concrete aggregates contained in the reactor vessel, and in a gas mixture contained in a pipeline downstream of a dryer arranged in connection with the reactor vessel prior to re-entering the reactor vessel.

The two equations below illustrate the chemical reactions occurring during carbonation: Firstly, carbon dioxide reacts with calcium hydroxide, also called Portlandite, a cement hydration product in the cement paste. This first reaction between calcium hydroxide (Ca(OH)₂) and CO₂ results in calcium carbonate or calcite (CaCO₃) and water (H₂O).

The reaction product, calcite, precipitates in the pore space of the system and densifies the whole microstructure of the cement matrix. This first reaction occurs relatively fast, so that the reserve of Portlandite is exploited first. The second reaction, in which calcium silicate hydrate (C-S-H), the main product of the hydration of Portland cement and primarily responsible for the strength in cement based materials, reacts with the carbon dioxide to calcium carbonate and amorphous silica, occurs more slowly:

Ca (OH)₂ + CO₂ → CaCO₃ + H₂O

C-S-H + CO₂ → CaCO₃ + SiO₂·nH₂O

The inventive process aims at providing optimal conditions for each of the two chemical reactions, which normally occur simultaneously, in order for the first reaction, which is faster, to optimally be carried out in a first phase in a humid environment, and the second reaction, which is slower, to optimally be carried out in a second phase with a more dry environment compared to the first phase.

In the first phase, i.e. the humid phase, the first reaction will use up a lot of CO₂, as this reaction is much faster. In order for this reaction to occur under optimal conditions, carbonic acid is needed, i.e. CO₂ which is dissolved in water. For this reason, a high water content in the concrete material is necessary at the beginning of this process, in order for a maximum of CO₂ to be dissolved in the fluid phase. Under optimal conditions, almost all of the Ca(OH)₂ reserve is converted to CaCO₃ within a few hours. In this first phase, the high density of the concrete material is achieved.

In the second phase, i.e. the dry phase, the second reaction is favored. In this phase, it is aimed to bring the humidity of the gaseous atmosphere down to an equilibrium water content of about 30-40%.

The proposed carbonation process thus comprises two distinct phases:
Phase 1: Activation of the carbonation reaction by the introduction, e.g. injection, of a large CO₂-amount until the sensor indicates a CO₂-concentration greater than 90%. The reaction with the freshly produced, i.e. just crushed and sieved, RCA is exothermic. The quantity of CO₂ introduced into the reactor vessel is then preferably controlled in a temperature-dependent manner, so that the temperature of the RCA ideally stays in a range of 50-60°C, and doesn't exceed 60°C, especially in preparation of a second phase of carbonation. Thus, the carbonation process can take place under ideal conditions. The temperature of the process is controlled trough the kinetics of the chemical reaction. The first phase of the carbonation can also be carried out at ambient conditions without the need for heating. Due to the exothermic nature of the reaction, in case of large volumes of RCA to be carbonated, heat under semi-adiabatic conditions is anyway produced. At 50-60°C, a rapid carbonation reaction takes place, with a penetration of CO₂ within the RCA particles so that their quality is increased compared to a process at lower temperatures. At higher temperatures, the risk of structural changes such as phase transformations and the generation of residual stresses within RCA is quite high. Due to the mechanical incompatibility between the matrix and the aggregates which are mechanically bonded, temperatures higher than 60°C can lead to forced deformations (eigenstresses) and micro cracking, and thus to a reduced strength of the RCA. The CO₂-concentration during the first phase of carbonation treatment should be kept in the range of 70-100%, preferably 90-100%. Usually, the humidity during the first phase rises to 90-100%, depending on size and composition of the fraction, and on the initial water content of the fraction, temperature etc.
Phase 2: Drying process.

In the second phase of the reaction, the conditions in the reactor are adjusted in order to favor the kinetics of the second reaction, in which calcium silicate hydrate in the presence of carbon dioxide is converted to calcium carbonate and amorphous silicone (gel formation). Dry conditions expedite the attack of the hydrate phases in the production of reactive amorphous aluminate-silicate gel and CaCO₃. In other words, in the second phase, the pores are preferably emptied with the aim to bring more CO₂ into contact with the C-S-H phases. The gel thereby generated has a high specific surface, which is very fine and also very reactive (pozzolanic reaction). When RCA fines carbonated by the second reaction come into contact with cement during their use as recycled concrete aggregates in the production of new concrete, the concrete material reacts to C-S-H again in the presence of Ca(OH)₂. This further increases the stability of the concrete as a building material. The gel-formation thus results in an increased CO₂ retention or storage, and in improved quality of the final product, such as for example increases compressive strength and density throughout all applications, including concrete and mortar. The gel phase acts like a cementitious binder and contributes to the increase of strength of the final product. RCA treated only according to phase 1 of the carbonation comprises much less or even no gel at all, resulting in a limited reactivity and a larger porosity. It acts more like a porous aggregate (sponge) when used in concrete production and only is useful in the production of concrete having lower to middle quality requirements.

Accordingly, a further embodiment of the present invention concerns a method, in which the relative humidity of the gas mixture within the reactor vessel is reduced and controlled to be kept at a lower level compared to the relative humidity in the first phase, and wherein in the second phase a temperature of the gas mixture within the reactor vessel is elevated and controlled to be kept at a higher level compared to a temperature in the first phase.

The carbonation reaction produces water, as illustrated in equation 1 above. To maintain ideal conditions for this second phase of the carbonation, in which mainly the above mentioned second reaction takes place, the relative humidity level within the gas mixture in the silo should be reduced and maintained at an ideal range of 10-70% in the second phase, advantageously 20-50%, more preferably 30-40%. At even lower values of relative humidity in the gaseous phase, the concrete material gets too dusty to handle, i.e. to weigh, dose, transport or to use in concrete production. According to a preferred embodiment of the invention, the gas mixture within the reactor vessel is circulated, e.g. using a blower. In the drying process of the second phase of the carbonation, the gas mixture within the reactor vessel is dried out with the help of a dryer, preferably an adsorption dryer, as it is very powerful, and is very efficient also in case of low relative humidity or low temperatures. Alternatively, for example a condensation dryer can be used.

Advantageously, the gas mixture is guided through a filter before entering the dryer. In this filter, very small particles, i.e. powder, are filtered out of the gas mixture, for a more efficient drying process.

Under the above-mentioned humidity and temperature conditions, CO₂ can penetrate the already carbonated external layer of the aggregates and reacts with other hydrate phases so that the above-mentioned chemical reactions take place. The reaction products precipitate within the porous cement matrix, reducing their porosity. Thus, the treated aggregates show a higher density and a reduced water absorption capacity, which is desirable in concrete production. In other words, the specific inventive two-phase carbonation treatment leads to an improvement of the physical and mechanical properties of the RCA, so that better performing concretes with a lower water-to-cement ratio can be produced.

The carbonation in step d) is preferably carried out for a range of 5-36 hours, more preferably 6-24 hours, most preferably 12-24 hours. The length of the carbonation can depend on various factors, such as the volume of the material to be carbonated, the grain size distribution of the fraction, etc. From an economic point of view, the duration of a two-phase carbonation treatment aiming at reaching about 90% of the maximal CO₂-uptake optimally is carried out for at the most 12 hours, distributed to approximately 4 hours for the first phase and approximately 8 hours for the second phase, provided, a sufficient CO₂-supply can be guaranteed. In general, the duration of the two-phase carbonation treatment is mainly dependent on the drying capacity in the second phase. As mentioned above, the drying capacity can be increased by moving/revolving the material, either by using a horizontally disposed reactor vessel in the form of a revolving drum/rotary cylinder, or by introducing a spiral or other mixing or lifting device which moves the concrete material from bottom to top in a preferably self-revolving vertical reactor vessel.

If the first phase of the carbonation takes place in a reactor vessel in which material circulation or movement is not possible, it is advantageous to transfer the concrete material into a revolving drum/rotating cylinder after the first phase (i.e. humid phase) of the carbonation in order to carry out the second phase (drying phase) of the carbonation there, as in the second phase of carbonation, the movement of the concrete material is especially important in order to maximize the CO₂-uptake.

However, in order to implement the two-phase carbonation treatment in an efficient manner, or in case only one type of reactor vessel is available, according to a further preferred embodiment, both phases can be carried out in a reactor vessel in the form of a horizontally disposed revolving drum/rotating cylinder. A fraction with a large grain size distribution, such as 0-32mm can be added to the reactor vessel and treated by phases 1 and 2 of the carbonation treatment as mentioned above. This would have to be conducted batch-wise or charge/wise due to the limited volume of revolving drums/rotating cylinders. The 0-32 mm fractions would then have to be subsequently sieved into various fractions of smaller grain size distributions for use in subsequent concrete production. For the purpose of this application, the term "reactor vessel" can therefore also comprise more than one reactor unit, wherein each unit is capable of carbonating a fraction of concrete aggregates simultaneously or subsequently, either in a rotating and/or static manner, depending on the desired type of carbonation treatment and on the grain size distribution of the fraction of concrete aggregates to be carbonated.

Alternatively, a fraction with a large grain size distribution, such as 0-32mm can be first statically carbonated according to phase 1, and then sieved into various different fractions of smaller grain size distributions. In other words, at least a portion of the fraction carbonated in phase 1 is also carbonated in phase 2. Of the fractions resulting from sieving, for example only the fraction with a desired smaller grain size distribution, such as a fraction with a grain size distribution having a range of 0-1mm or 0-4mm, which has the highest CO₂-uptake/storage capacity, is then, according to a further preferred embodiment of the present invention, transferred into a revolving drum/rotary cylinder for carbonation according to phase 2, e.g. via a conveyor belt. As in said embodiment not all fractions need to undergo also the second phase of carbonation, the size of the revolving drum/rotary cylinder could be limited in volume.

A combination of both types of reactor vessels could be realized by integrating a rotating device or a material transport device into a vertical reactor vessel, as mentioned below. This would also allow large fractions with a large grain size distribution, such as 0-32mm, to be submitted to both carbonation phases 1 and 2, if necessary, distributed into several smaller charges. Thereby, the advantage of carbonating larger and smaller particles together can be combined with the advantage of carbonating the sand fraction under dryer conditions.

Alternatively the second phase of carbonation could also be carried out in a reactor comprising a number of circular hearths or kilns superimposed on each other, such as a Multiple Hearth Furnace Reactor, a Herreshoff oven, or vertical calciner. Therein, for example, the material fed from the top into the reactor is moved by the action of rotating rabble arms and the revolving mechanical rabbles attached to the arms move over the surface of each hearth to continuously shift the contents. The rabble arms are attached to a rotating central shaft passing through the center of the reactor. As the material is moved, the charge loaded into the reactor at the top hearth gradually moves downward as it passes through windows in the floor of each hearth or through alternate passages around the shaft and the periphery until it finally emerges at the bottom.

The carbonation in step d) as listed above is preferably carried out in the reactor vessel under controlled conditions, including at least one of the following, and preferably all of the following:
- temperature control:
   The temperature is measured preferably in an upper region, i.e. upper third of the reactor vessel, i.e. above the fraction of recycled concrete aggregates to be carbonated, and/or within a fraction of concrete aggregates contained in the reactor vessel. Preferably, the temperature of a gas mixture extracted from the reactor vessel for the purpose of drying (as described below) is measured again prior to re-introduction of the dried gas mixture into the reactor vessel. The temperature of the gas mixture in the reactor vessel and/or within the fraction of RCA contained inside the reactor vessel is preferably adjusted by varying the amount of CO₂ introduced into the reactor vessel. An adjustment of the temperature is possible by adjusting the volume of the gas mixture flowing through the reactor. The maximum temperature within the fraction of RCA to be carbonated and contained in the reactor vessel ideally shall not exceed 60°C, and shall preferably be kept in a range of 50-60°C, at least for the second phase of carbonation. A carbonation temperature of 50°C to 60°C leads to an acceleration of the carbonation process as well as an increase of the amount of CO₂ absorbed. The temperature control by temperature-dependent addition of CO₂ is reliable, simple, economical and environmentally friendly, as no heating/cooling is necessary. For example, upon reaching a temperature of 60°C in the fraction of RCA, the flow rate of CO₂ into the reactor vessel is reduced.
   In case of a two-phase carbonation, the temperature in the first phase need not necessarily be increased. However, in the second phase, an elevated temperature accelerates the exchange of granulate with the gaseous phase. The quantitative temperature dependency is based on Fick's law of diffusion and the Arrhenius equation. In the second phase, the temperature range shall be preferably in the range of 50-60°C.
- relative humidity control:
   The relative humidity is measured preferably in the gas mixture in an upper region, i.e. upper third of the reactor vessel, above the fraction of concrete aggregates when located inside the reactor vessel after having been filled into the reactor vessel, and is measured preferably in a region of entry of the concrete aggregates, and/or can be measured within the recycled concrete aggregates. In phase 1 of carbonation, the relative humidity is preferably measured, but not necessarily controlled, compared to phase 2, in which the humidity control is important. As mentioned above, in the second phase of carbonation, the gas mixture is dried, in order to lower the relative humidity in the reactor vessel to a preferred humidity level of 10-70%, more preferably of 20-50%, even more preferably of 30-40%. This range shall be maintained at least throughout the second phase of carbonation.
   For smaller charges, the use of a condensation dryer or a cyclone dryer for moisture control associated with the reactor vessel is simple, efficient, economical and environment-friendly, however, an adsorption dryer is more powerful and more efficient, especially for larger charges. In case of a silo as a reactor vessel, the gas mixture can be extracted from the upper region of the reactor vessel, dried in a suitable dryer, associated with a separate pipe, and blown back into the reactor vessel, e.g. from the bottom. Preferably, there is also a bypass for a portion of the gas mixture extracted which is not supposed to be guided through the dryer. The portion/fraction of the extracted gas mixture to be dried and thus also the portion of the extracted gas mixture which is not to be dried is controlled by a controller depending on the relative humidity of the gas mixture measured inside the reactor. Preferably, the humidity level is measured again downstream of the dryer and prior to the re-introduction of the gas mixture into the reactor vessel.
- gas circulation and/or material revolution:
   According to a preferred embodiment of the invention, the flow rate of the gas or gas mixture is measured in m³/h and, if necessary, adjusted. The flow rate (m³/h) of the gas mixture is dependent on the reactor vessel volume. Advantageously, the flow rate of the gas mixture during the carbonation treatment preferably is at least 1 time the total reactor vessel volume per hour, and more preferably ranges from 5-120 times the total reactor vessel volume, wherein the gas flow rate most preferably lies in the range of 10-50 times the total reactor vessel volume per hour.
   Preferably, a fan or a blower-inverter is used for maintaining an optimal circulation of the gas mixture in a simple, efficient, economical and environment-friendly manner. Gas circulation facilitates the humidity control. For fractions of larger grain sizes, it may be sufficient if the gas mixture can be circulated, while for smaller grain sizes, such as grain size distributions of 0-4 mm or 0-2 mm, i.e. sand, the material of the fraction itself must be revolved, such as for example by a mixing or a lifting device in case of a silo, such as a conveyor or a spiral which transports the material in a direction from the bottom to the top of a vertical silo, or by means of a horizontally disposed revolving reactor vessel. Material revolution is however also advantageous for fractions of larger grain size distributions, as it accelerates and improves the drying process. In case of material revolution, the humidity control is more difficult, but must anyhow be carried out. Material revolution also ensures that all surfaces of the particles of the crushed RCA are exposed to the CO₂.
- control of a CO₂-concentration in % in the reactor vessel:
   Preferably the CO₂-concentration is in the range of 70-100% (by volume), wherein preferably the CO₂-concentration is measured in an upper region of the reactor vessel, and/or at about one third and/or at about two thirds of a total height of the reactor vessel when measured from the bottom of the reactor vessel. The carbonation reaction is accelerated upon reaching a CO₂ concentration of above 90%. After the carbonation reaction, the recycled carbonated concrete aggregates are preferably removed from the reactor vessel when the CO₂ concentration in the reactor vessel is very low, i.e. preferably when it falls below 1%, or when the amount of CO₂-consumption over time falls under 1kg CO₂ per ton of RCA per hour, in order for as little CO₂ as possible to be wasted.
- control of CO₂-flow rate (in m³/h) or CO₂ amount (in m³ or kg)
   The CO₂ flow rate preferably is measured at a location of at least one of the following: at or downstream of an outlet of a CO₂-tanker, at a pipeline in an upper region of the reactor vessel, at a pipeline in a lower region or at a bottom of the reactor vessel. Preferably, the flow rate of CO₂ at initial filling of the silo is at least 1 time, more preferably at least 5 times the total reactor vessel volume per hour.
- control of degree of opening of control valves in %:
   Control valves are preferably located and controlled at a pipeline directed into a lower region or bottom of the reactor vessel and/or at a pipeline directed to an upper region of the reactor vessel.

The water content of the fraction of concrete aggregates in terms of dry basis moisture content, i.e. a percentage equivalent of the ratio of the weight of water to the weight of the dry matter, can be adjusted prior to introduction into the reactor vessel. If any of the RCA fractions seems too dry after crushing, water can also be added to the separate fractions prior to their introduction into the reactor vessel, such as by a sprinkler system. Thereby, the settings of the carbonation reaction can be optimally prepared. In addition or alternatively, the relative humidity level of the gas mixture can be adjusted during the carbonation reaction in the reactor vessel.

Optionally, each fraction of concrete aggregates is carbonated/treated separately with a preferably low bandwidth. A narrow bandwidth fractionation of the RCA can contribute to achieving the good CO₂ sequestration results. In fractions with a narrow bandwidth, the CO₂ can flow more freely because the gaps in between the coarser grains are not blocked by finer materials. This can lead to better accessibility of the grains, as a narrow bandwidth results in smaller contact areas between the grains, a larger void volume. This again can enable a better process control, as the carbonation time is similar for grains of a similar diameter. The interdependent process parameters, such as CO₂ amount, relative humidity, temperature thus can be more predictable and can be better pre-set depending on the fraction to be carbonated in the respective batch in the reactor vessel .For each fraction there is a special, dynamic setting of the plant, as each parameter, such as amount of CO₂, gas mixture, relative humidity, and temperature, can be separately monitored and controlled during the carbonation reaction. This can contribute to ensure a high quality and reliability in the concrete production, e.g. due to reduced fluctuations in water demand. By carbonating the fractions of small bandwidths separately, the quality of the concrete can be increased, which allows increased amounts of RCA to be used in the concrete mix and thus the concrete mix needs less cement to increase the strength, reducing the size of the respective "CO₂-footprint". The present method therefore contributes to resource optimization and thus to a resource saving system. In case of a two-phase carbonation treatment, in general, every fraction is suitable to be treated in the first phase. However, for the second phase, which is rather time- and energy consuming, the fractions with increased storage capacity, i.e. the sand fraction, are more suitable. In the case of fraction with a grain size distribution exceeding 4mm, the entire carbonation treatment, i.e. both phases 1 and 2 could be carried out in a silo in a static manner. A condition for the activation of the second phase is that the concrete material is sufficiently dried. This is facilitated by material movement/revolution inside the reactor vessel in order to ensure a continuous contact of the particles with the gaseous phase, e.g. by a revolving drum with the corresponding shovel/blade elements, especially if the fraction includes sand with a grain size distribution of 0-4mm.

If the concrete mix is of lower quality, for example, it has a lower compressive strength, higher water content, etc., and more cement has to be added to the mix to ensure stability. However, the cement production itself is associated with significant CO₂ emissions, and the resulting concrete with a greater cement content has a smaller ratio of recycled material, and thus leaves a larger "CO₂-footprint". That is why the present invention contributes to a minimization of the cement content in concrete production.

The present invention furthermore concerns a fraction of carbonated, recycled concrete aggregates, derived from demolition waste and produced by a method as described above. The fraction of carbonated RCA (i.e. carbonated recycled concrete aggregates, CCA) has a defined grain size distribution d/D selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 2/64, 4/64, 8/64, 16/64, 20/64, 22/64, 32/64, and 64/128, wherein a fraction with any other grain size distribution suitable for concrete production according to EN 12620:2013 can also be used. After the carbonation treatment, said fraction of carbonated RCA, i.e. CCA, has a CO₂-content of 5-55 kg/t, wherein the CO₂ content varies greatly among different fractions, depending largely on the grain size distribution.

The advantages of intensively carbonated RCA are: i.) reduced water absorption capacity, ii.) higher strength, iii.) better pumpability of the resulting concrete; iv.) better flowability, i.e. rheology of the concrete in highly reinforced elements.

Concrete comprising RCA which have only be carbonated according to phase 1, acts more like a conventional RCA-concrete according to the prior art, and it tends to have an elevated water-to-cement ratio (W/Z) and thus exhibits a limited workability. Furthermore, the amount of RCA which can be added to new concrete is limited, if the RCA have only been treated according to phase 1. By using the two-phase carbonation treatment, substitution values of 80-90% can be reached.

The present invention further concerns a concrete composition produced from recycled demolition waste derived concrete aggregates. The respective concrete composition comprises cement, preferably a Portland limestone cement, a Portland composite cement or a composite cement, preferably a cement according to EN 197-1:2011. The concrete composition according to the present invention furthermore comprises a filler, concrete aggregates in various fractions of different grain size distributions as mentioned above, water, a plasticizer, and possible other admixtures, preferably according to EN 934-2:2012. The concrete composition according to the present invention is characterized in that at least 80% by weight, more preferably at least 85% by weight, most preferably at least 90% by weight of the concrete aggregates contained in the concrete composition are made up of recycled concrete aggregates (RCA). At least one individual fraction of these RCA having a defined grain size distribution d/D selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 2/64, 4/64, 8/64, 16/64, 20/64, 22/64, 32/64, and 64/128, preferably with a defined grain size distribution d/D selected from a group consisting of 0/4, 4/8, 8/16, 0/32 and 16/32, is made up of carbonated recycled concrete aggregates. The concrete composition according to the invention comprises a compressive strength of at least 15 MPa, preferably at least 25 MPa, more preferably at least 30 MPa, most preferably of at least 35 MPa (i.e. cube strength, measured after 28d of hardening according to EN 206-1/DIN 1045-2), and a Young's modulus of elasticity (E-module, *E*=σ/ε) of at least 20 GPa, preferably at least 25 GPa, more preferably at least 30 GPa (measured according to EN 12390-13). Storage of the samples of concrete composition prior to measurement of the compressive strength and the Young's modulus is carried out according to EN 12390-2. Preferably the concrete composition preferably comprises a density of at least 2.3 g/cm³, and preferably a water to cement ratio at the most 0.5. Under ideal conditions, such a concrete composition comprising carbonated RCA produced according to the above mentioned inventive process can store at least 20 kg and up to 50 kg of CO₂ per m³ of concrete.

In the concrete composition according to the present invention, the at least one fraction of recycled concrete aggregates has been recycled and carbonated, separately from other fractions with different defined grain size distribution d/D, in its individual fraction, preferably by a method as described above. The performance of the RCA concrete can be further increased if more than one of the individual fractions, and even possible that all of the individual fractions with different grain size distributions contained in a concrete composition have been recycled and carbonated separately in their individual fractions with each a different defined grain size distribution d/D. However, depending on the purpose of use of the new concrete, it may not be necessary to carbonate all fractions. Possibly, the carbonation of only one fraction, e.g. only the smallest fraction (sand) may be desired.

The prerequisite for producing a high quality concrete composition despite the use of fractions of recycled material contained therein, is an optimized CO₂ treatment of the separate individual RCA fractions. An optimized granulometric curve (Fuller curve), which is a graphical representation of the proportions of aggregates according to the size of the particles that form it, also contributes to the success of the treatment. For the concrete production, the separate fractions of carbonated recycled concrete aggregates (or a combination of carbonated fractions of RCA with un-carbonated fractions of RCA) are combined/re-mixed with each other according to a given proportion, fitting a suitable granulometric curve for an optimal, desired individual concrete composition. Thereby, the cement amount in the mix can be minimized, and thus, the CO₂ footprint of the RCA concrete significantly reduced.

A spherical rock geometry of the RCA, which can be influenced by the crusher type and settings and the use of a well-acting superplasticizer further improve the quality of the recycled concrete product.

It is also possible, in addition to the carbonated RCA produced according to the above described method, to add sieved aggregates collected from a washing unit of the concrete production plant, i.e. material which has been washed off from trucks. This material has characteristics similar to primary material and can even further increase the percentage of recycled material in the concrete composition and reduce the waste of valuable materials.

The amount of CO₂ bound in the at least one fraction of carbonated recycled concrete aggregates contained in the concrete composition preferably is in the range of 5 to 55 kg/t, depending on the volume of the fraction and its grain size distribution.

The present invention furthermore concerns a facility for the recycling of concrete aggregates from demolition waste, comprising, preferably within a radius of at the most 1 km:
- an apparatus for crushing and/or sieving demolition waste derived concrete aggregates;
   The crushing unit and the sieving unit can either be combined in one apparatus, or be realized as two separate units. If realized as two separate units, the sieving unit can be located immediately downstream of the crushing unit, in which case the sieving unit is preferably connected to the crushing unit by a conveyor belt. In this case, it is desirable that the time between crushing and carbonation is minimized.
   In a facility according to another preferred embodiment of the present invention, the reactor vessel is located immediately beneath the crushing and/or sieving unit, to even avoid the use of belt conveyors. In this case the fractions of RCA exiting the crushing unit or, in case of an immediately adjacent sieving unit the fractions of RCA exiting the sieving unit, directly enter the inlet of the reactor vessel.
   In an alternative facility according to another preferred embodiment of the present invention, the RCA material is crushed and/or sieved in a CO₂ atmosphere in a container. This could further increase the CO₂ storage capacity within RCA. This can be realized in that a crushing- and/or a sieving unit is integrated in the reactor vessel, or in that the crushing and/or sieving unit itself is formed as a closed container which is suitable to serve as a reactor vessel for the carbonation reaction. The term "closed container" is to be understood in the sense that a loss of CO₂ is prevented by extracting gas mixture from an outlet and re-introducing it from an inlet of the reactor vessel in a controlled manner, without any gas escaping. In a preferred embodiment of the present invention, the reactor vessel is closed with a lid, in order to allow the gas mixture (i.e. CO₂ with other components of air) to circulate through the reactor vessel without any loss of CO₂. Carbonation in an open reactor vessel is also possible, yet less efficient and concomitant with CO₂ losses.
   The sieving unit can alternatively also be located even further downstream of the crushing unit, e.g. even downstream of the reactor vessel, such that the crushed RCA are first carbonated and then sieved into smaller fractions.
   In the case of the non-industrial, small scale applications according to the prior art, an acceptable yield was only achieved by applying small scale sieves with larger band widths. By using the method according to the present invention, large yields can be achieved with large, industrial scale sieves of smaller band width.
- a reactor vessel, for carrying out a controlled carbonation of a fraction of a recycled concrete aggregate capable of binding a predetermined amount of CO₂ and for receiving the fraction of a recycled concrete aggregate obtained from a demolition site with a defined grain size distribution d/D;
   Carrying out the carbonation treatment under pressurized conditions accelerates the carbonation reaction. However, the carbonation treatment according to the present invention can be carried out in a standard container, such as a silo, or in a rotating cylinder, without pressure, i.e. only under standard atmospheric pressure. The filling of a reactor vessel after the crushing step normally takes hours, as the crusher only delivers 100-200 tons of material per hour, while e.g. a silo contains 500/1000 tons. An advantage of a reaction vessel which is not subjected to any pressure other than standard atmospheric pressure, is, that the carbonation process can begin immediately with the introduction of the material to be carbonated.
   The reactor vessel can also be used as a storage vessel for the carbonated recycled concrete aggregates after the carbonation reaction and prior to transfer to the concrete production plant. In order to facilitate a more efficient production, preferably several reactor vessels and/or storage vessels are present at the recycling facility such that each fraction can be treated and stored in a separate vessel. Thus, different fractions can be carbonated simultaneously in different vessels. Alternatively, a reactor vessel can serve purely as a reactor vessel and each fraction is transferred to one of several separate storage vessels following the carbonation reaction and prior to its use in the concrete production plant.
- a concrete plant for producing new concrete for use in a new construction.

In order to achieve a sustainable and economic RCA concrete, all the preparation steps prior to carbonation are advantageously centralized, i.e. carried out in close proximity to each other in order to avoid emissions resulting from transport. More advantageously, the reactor vessel in which carbonation takes place, is also located within a short distance from the concrete production site which can be covered with conveyor belts or pipes. Preferably, the disposal site, crushing and sieving unit, the reactor vessel, and the concrete plant are located on the same site.

No energy and CO₂-producing consuming logistics are necessary if conveyor belts are used between the different units on site. Preferably the apparatus for crushing and/or sieving is connected to the reactor vessel by at least one conveyor belt for transferring a fraction of crushed recycled concrete aggregate to the reactor vessel, and/or wherein the reactor vessel is connected to the concrete plant by at least one conveyor belt for transferring a fraction of carbonated recycled concrete aggregate to the concrete plant.

The respective facility preferably further comprises a disposal site, in which demolition waste derived blocks of concrete aggregate are stored under a roof, i.e. weather shelter, for drying until a desired water content of less than 10%, preferably a water content in a range of 1-8%, most preferably of 2-7% is reached in said concrete blocks, prior to introducing the demolition waste derived concrete blocks to an apparatus for crushing- and/or sieving, as described above.

Advantageously, the facility further comprises an apparatus for humidifying/wetting the carbonated fraction of concrete aggregate prior to the introduction of the carbonated fraction into the concrete production plant. The step of wetting can, for example be carried out by a sprinkler system.

By applying the carbonation treatment method according to the present invention the amount of recycled concrete aggregates can reach a range of 90-100% in every day concrete production, which means that the proportion of primary, un-recycled aggregates is minimized. Natural resources are thus conserved. In addition, a new concrete containing carbonated recycled concrete aggregates carbonated according to the inventive two-phase process and produced according to the present invention exhibits a better density and strength, a better pumpability, a reduced water absorption capacity and thus a higher quality than concrete produced with recycled concrete aggregates carbonated according to the prior art.

While in Switzerland alone, 5 million tons of concrete demolition waste accumulate per year, the present recycling process makes it possible to recycle industrially relevant quantities of RCA from such demolition waste. The inventive process has very small CO₂ emissions and small impact on the CO₂ footprint per produced m³ of concrete.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic representation of a process for the preparation of RCA and its use in concrete production;
- Fig. 2: shows an illustrated representation of the process of Fig. 1;
- Fig. 3: shows the setup for the RCA carbonation process according to a first preferred embodiment of the invention;
- Fig. 4: shows the setup for the RCA carbonation process according to a second preferred embodiment of the invention;
- Fig. 5: shows the graphical representation of TGA data of untreated RCA, vs. two differently treated RCA in comparison to each other;
- Fig. 6: shows a table with data calculated from the TGA-data shown in Fig. 5 as a comparison of the three different RCA;
- Fig. 7: shows a table with the results of a comparison of mortar containing primary sand, vs. RCA-sand treated with only phase 1, or RCA treated with phases 1 and 2 of carbonation, comparing mortar composition, fresh mortar properties and strength of the different mortars;
- Fig. 8: shows a table with the results of a comparison of concrete containing primary sand vs. RCA-sand treated with only phase 1, or with phases 1 and 2 of carbonation, comparing concrete composition, fresh concrete properties and strength of the different concretes;
- Fig. 9: shows a set-up for a series of four tests for the carbonation of sand;
- Fig. 10: shows a table showing the water absorption WA24 of the four test samples;
- Fig. 11: shows a table with the results of the four tests in dependency of various process parameters;
- Fig. 12: shows a graphic representation of the results shown in Fig. 11
- Fig. 13: shows a graphic representation of the course of relative humidity over time for tests 1-4;
- Fig. 14: shows a schematic setup for carrying out the RCA carbonation process according to a third preferred embodiment of the invention.

### DESCRIPTION OF PREFERRED EMBODIMENTS

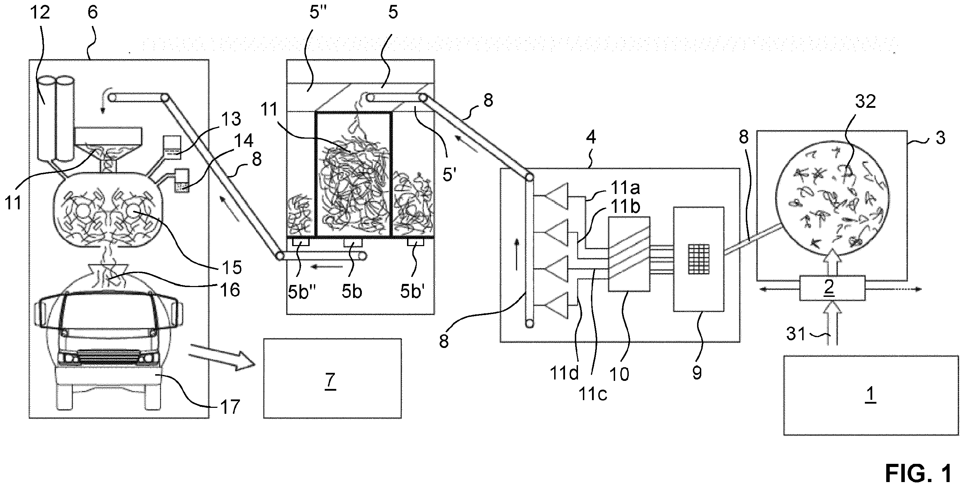

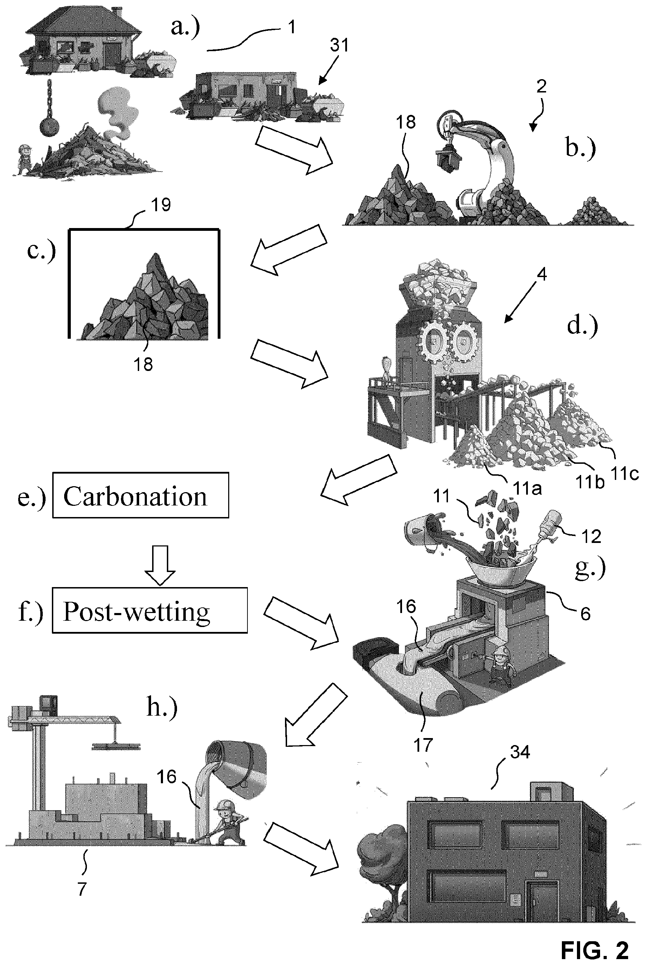

The recycling process according to the present invention comprises the following steps, as illustrated in Figures 1 and 2:

### a.) Demolition of a building:

To achieve high quality secondary material, it is of utmost importance to decontaminate the building at the demolition site 1 by removing possibly present contaminants such as asbestos or polychlorinated biphenyls (PCB). The decontamination is followed by a careful deconstruction to maximize the amount of pure concrete waste. The concrete waste is loaded onto a truck in form of irregular large blocks 18 and transported to a construction waste processing plant 2.

### b.) Construction waste processing:

At the construction waste processing plant 2, after the removal of other residual construction materials as plastic, metal, etc., the concrete waste blocks are sorted into high and low quality concrete waste. For producing highest-quality recycled concrete aggregates (RCA), only the highest quality concrete waste is used. Lower quality concrete waste can be used for the production of lower quality recycling concrete, which is used for other purposes, such as backfillings, cellars, pavement beddings, etc.

### c.) Storage of high quality concrete waste blocks at the disposal site:

In order to control the moisture content of the concrete waste, the concrete waste blocks 18 are stored at a unit 19 sheltered from rain, e.g. under a roof. This allows the concrete waste 18 to dry out before crushing until the concrete blocks don't contain any visibly wet surfaces anymore.

### d.) Crushing and sieving:

The concrete waste blocks 18 are then processed in a crushing and sieving unit 4. First, they are crushed in a suitable crusher 9, such as a jaw crusher. The resulting material is sieved in a sieving unit 10 into different well-defined fractions 11a, 11b, 11c, 11d which are commonly used in a concrete mix design. The most typical fractions used in concrete production are the following:
0-4 mm (sand), 4-8 mm, 8-16 mm, and 16-32 mm. Other bandwidths are also possible, such as grain size distributions d/D (in mm) selected from a larger group of 0/1 (i.e. 0-1 mm), 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 2/64, 4/64, 8/64, 16/64, 20/64, 22/64. Most concrete compositions can be produced with these fractions following the respective project prescriptions, other suitable fractions are listed in in EN 12620:2013. In rare cases where mass concrete is used, fractions with a larger grain size distribution d/D of 32/64 or even 64/128 are also possible.

The low bandwidth fractioning not only allows a very efficient carbonation, but also contributes to a high quality concrete production later on. In order to achieve a high density material, a virtually ideal sieving/grading curve must be achieved. Examples of distributions of fractions in a concrete composition according to the Fuller's curve are, for concrete introduced by crane, a 0-4 mm fraction of 35%, a 4-8 mm fraction of 15%, a 8-16 mm fraction of 20%, and a 16-32 mm fraction of 30%, and for concrete introduced by pump a 0-4 mm fraction of 40%, a 4-8 mm fraction of 10%, a 8-16 mm fraction of 20%, and a 16-32 mm fraction of 30%,. As the waste quality always differs among demolition waste 31 and the crushing process delivers a stochastic sieving curve, a virtually ideal sieving curve can only be achieved by remixing the obtained fractions in the desired or right amounts in the concrete production plant in step g.) as described below.

The most favourable condition for the carbonation reaction of step e.) as described below with reference to figure 2, is when the material to be carbonated contains sufficient moisture for the reaction but not enough to act as a barrier. This optimum can be set in the crushing step, i.e. a water sprinkler can be used to humidify the material in the crusher. After the crushing- and possibly sieving step, a person skilled in the art can determine, using a water content sensor, i.e. a capacitive sensor, whether the material has the necessary water content, e.g. of 5-7% for a sand fraction having a grain size distribution of 0-4 mm, 3-4% for a fraction having a grain size distribution of 4-8 mm, 2-3% for a fraction having a grain size distribution of 8-16 mm, and about 2% for a fraction having a grain size distribution of 16-32 mm. If a fraction of crushed concrete waste is too dry after having completed the crushing- and possibly sieving step, it can be wetted by sprinkling it with water after the crushing step, e.g. on the conveyor belt on its way to the reaction vessel (not illustrated).

### e.) Carbonation process:

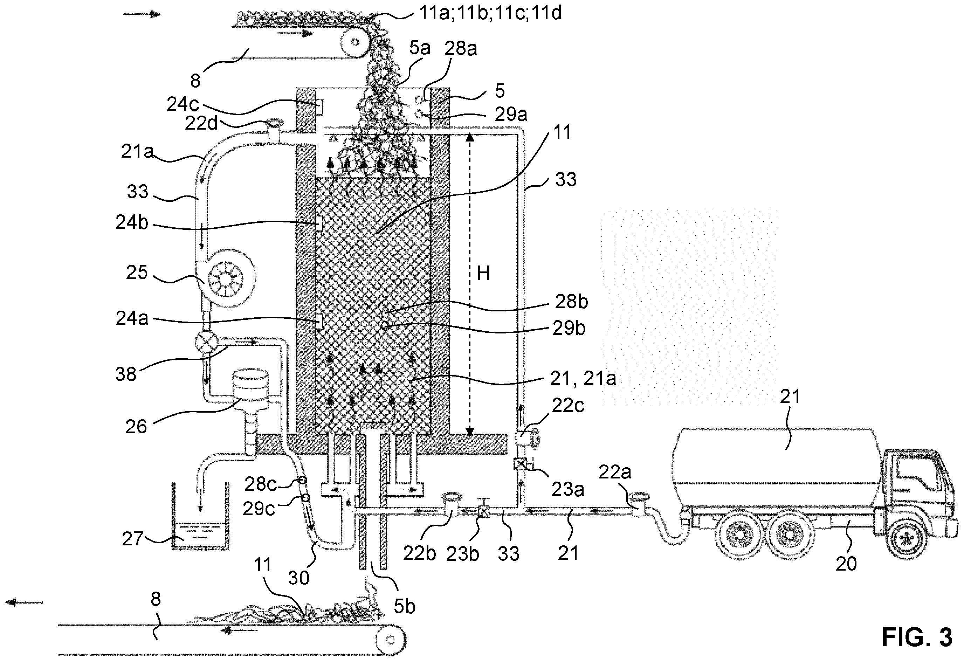

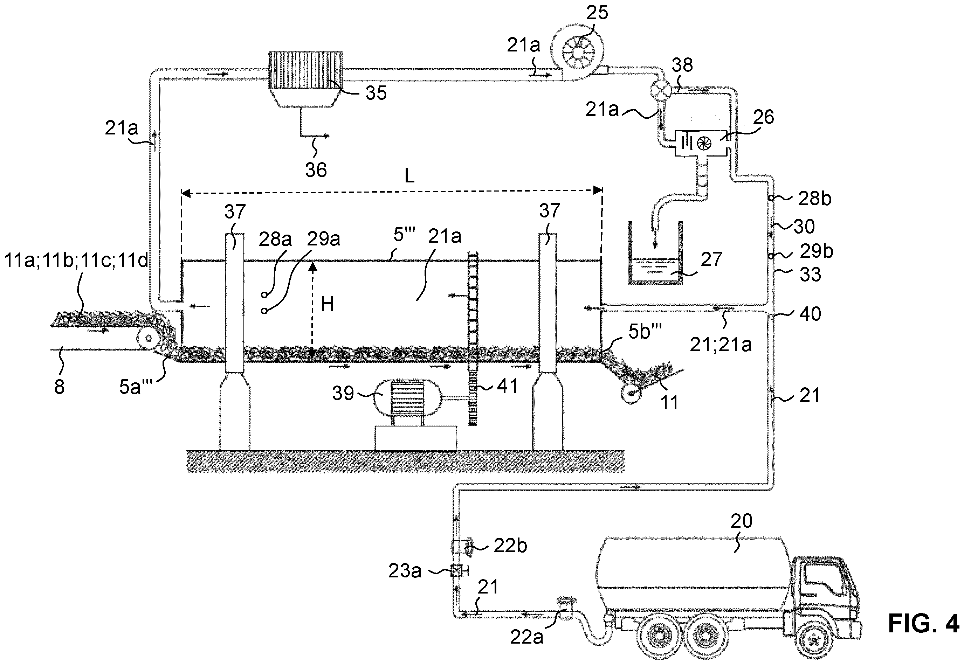

After completing the crushing process and possibly also a sieving process, the crushed RCA material, in its respective specific fraction(s) 11a, 11b, 11c, 11d, is immediately and directly transferred to a silo 5. This is a reactor vessel, i.e. a container specially equipped for the CO₂-treatment, i.e. carbonation, as illustrated in Figures 3 and 4. In the examples illustrated, the proximity of the crushing and sieving unit 4 to the reactor vessel 5 allows the transfer of the RCA to be carried out via a conveyor belt 8.

The freshly produced, i.e. crushed and sieved and possibly cleaned recycled concrete aggregate then comes into contact with the CO₂ in the silo immediately after having completed the crushing and sieving process in a crushing- and possibly sieving unit 4. The carbonation treatment is performed batch by batch, in separate individual fractions 11a, 11b, 11c, 11d of recycled concrete aggregates each with a defined grain size distribution d/D selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 2/64, 4/64, 8/64, 16/64, 20/64, 22/64, 32/64, and 64/128. In most cases, the carbonation is carried out in fractions having a grain size distribution d/D of 0/4, 4/8, 8/16, 0/32, and 16/32, i.e. fractions with bandwidths having a grain size distribution selected from a group consisting of 0-4 mm, 4-8 mm, 8-16 mm and 16-32 mm, however, other fractions according to EN 12620:2013 other than the ones listed above may be suitable.

Every single RCA fraction 11a, 11b, 11c, 11d is carbonated separately in a reactor vessel 5, 5', 5". In figure 1, three reactor vessels 5, 5', 5" are illustrated aligned next to each other. Each has its own inlet 5a (not shown in Fig. 1) and outlet 5b, 5b', 5b".

In the example illustrated in figure 1, the reactor vessels 5, 5', 5" also serve as storage vessels for the carbonated recycled concrete aggregates after the carbonation reaction and prior to transfer to the concrete production plant.

In the illustrated example of figure 3, according to a first preferred embodiment, the reactor vessel or silo 5 is pre-filled with liquid or gaseous CO₂ prior to the introduction of the RCA fraction 11a, 11b, 11c, 11d to be carbonated. The CO₂ used for the carbonation treatment originates from a regenerative source. The reactor vessel 5 is filled with CO₂ to about 80% of the reactor vessel volume. The liquid or gaseous CO₂ is introduced into the reactor vessel 5 from the bottom. According to figure 1, the respective fraction 11a, 11b, 11c, 11d of RCA to be carbonated is introduced at the top of the silo, e.g. via a conveyor belt 8, and moves to the bottom of the silo 5. After filling of the silo, i.e. reactor vessel 5 with the material to be carbonated, additional liquid CO₂ can be injected, e.g. with a sprinkling system from the top of the silo and simultaneously CO₂ can also be injected from the bottom of the silo as shown in Fig. 2, to adjust the CO₂ amount if necessary. The amount of injected CO₂ is measured by flow meters 22a, 22b, 22c, and controlled by control valves 23a, 23b, 23c at different locations.

The fraction of freshly crushed and possibly sieved RCA starts to carbonate immediately upon contact with the CO₂, allowing the degree of carbon dioxide sequestration to be maximized. An exothermic reaction sets in within the RCA, heat is set free and the temperature of the RCA starts to increase. The dosing of the CO₂ content and thus of the volume of the gas mixture flowing through the reactor vessel 5, 5', 5" allows a temperature control of the exothermic reaction inside the reactor vessel 5, 5', 5". Based on respective temperature measurements by various temperature sensors 28a, 28b, 28c, at different metering points inside the reactor vessel 5, i.e. within the fraction of RCA and above it, the amount of CO₂ injected in the upper region and/or from the bottom of the reactor vessel 5 is adjusted, e.g. by a control unit (not depicted).

In the illustrated example of figure 4, according to a second preferred embodiment, the RCA material is introduced from a first end into a horizontally arranged rotating cylinder 5"', which serves as the reactor vessel. The CO₂ is blown into the reactor vessel 5‴ from an opposite second end and in the opposite direction. Due to the rotation, continuously different surfaces of the particles of RCA are contacted by the gas mixture. The carbonation takes place in a "batch-wise" manner in order to ensure a "closed system". Due to the continuous movement, i.e. revolution or mixing of the RCA material in the reactor vessel, the method according to this second preferred embodiment can further accelerate the rate of carbonation. The gassing of the reactor vessel 5‴ and the adjustment of the control parameters is carried out like in the first embodiment comprising a vertical reactor vessel 5, 5', 5", i.e. a silo: First, the reactor vessel 5‴ is pre-filled with CO₂ up to saturation of the air contained in the reactor vessel. Upon introduction of the RCA, CO₂ is then added gradually according to a controller in dependency of the temperature measured in the reactor vessel 5"', so that the temperature of the RCA ideally stays in a range of 50-60°C, and doesn't exceed 60°C. The temperature of the RCA is measured by a temperature sensor 28b placed in the reactor vessel in the midst of the batch of RCA located in the reactor vessel. Thus, the carbonation process can take place under ideal conditions. The CO₂-concentration during the carbonation treatment is kept in the range of 70-100%. To maintain ideal conditions for carbonation, the relative humidity of the gas mixture within the reactor vessel 5, 5', 5", 5‴ is reduced in the second phase of carbonation and ideally maintained at a range of 30-40%. For this purpose, the gas mixture 21a within the reactor vessel 5, 5', 5", 5‴ is circulated, e.g. using a blower 25 and dried out with the help of a dryer 26, such as an adsorption dryer, preferably including a heater 44, if necessary. In the embodiment shown in Fig. 4, a lot of ultrafine particles, i.e. powder is produced due to the revolution of the material in the rotating cylinder. For the protection of the blower 25, which is used to circulate the gas mixture 21a, this powder is removed by passing the gas mixture 21a extracted from the reactor vessel 5‴ through a filter 35 located upstream of the blower 25. The powder 36 retained by the filter 35 can also be recycled and re-used in the production of new cementitious materials. After the carbonation treatment has been carried out in the reactor vessel 5‴ according to Fig. 4, the carbonated fractions 11 of RCA, i.e. CCA are removed from the reactor vessel 5‴ by tilting the reactor vessel 5‴ or by means of spirally wound or screwed elements or sheets mounted on the internal surface of the reactor vessel 5‴ which urge the CCA out of the reactor vessel upon rotation thereof (not shown).

Each respective RCA-fraction is exposed to a CO₂ atmosphere in the reactor chamber under controlled conditions. The CO₂ penetrates the aggregates and reacts with the hydroxides and calcium- silicate-hydrate of the cement contained in the RCA. The surfaces of each particle of RCA were just freshly produced during the crushing step and thus exhibit a high CO₂ intake.

In case of a one-phase carbonation process, the carbonation process is carried out for 5-24 h, depending on the amount of CO₂ that has to be sequestrated. After a 20h treatment, in case of a one-phase carbonation treatment, the CO₂-absorption rate decreases significantly so that the CO₂ injection is stopped, in order to avoid additional energy consumption. In a two-phase carbonation treatment the first phase is run for up to 8 hours, preferably 2-6 hours, more preferably 3-4 hours, and the second phase is run preferably for 5-12 hours, more preferably 6-8 hours. The residual CO₂ present in the process, i.e. in the reactor vessel and in the pipes thereof, continues to react within the aggregates for a couple of hours. When the CO₂ content measured in the reactor vessel decreases to 1-2%, preferably below 1%, the reactor vessel 5, 5', 5", 5‴ can be opened. Thus, essentially no CO₂ will be released to the atmosphere or wasted when the reactor vessel 5, 5', 5", 5‴ is opened for transfer of the already treated aggregates to a concrete production plant 6. To ensure the safety of the workers, i.e. to prevent danger arising from possible CO₂ emissions, different CO₂ sensors are also located outside of the reactor vessel (not illustrated). In case of a leakage, the sensors will immediately be activated and safety measures applied.

The following parameters are monitored:
- temperature (°C):
   - measured in the upper region of the reactor vessel;
   - measured within the fraction of RCA in the reactor vessel;
   - measured downstream of the dryer;
- relative humidity (%):
   - measured in the upper region of the reactor vessel;
   - measured within the fraction of RCA in the reactor vessel;
   - measured downstream of the dryer;
- CO₂-concentration (%):
   - measured in the upper region of the reactor vessel;
   - measured at about one third of the total reactor vessel height;
   - measured at about two thirds of the total reactor vessel height;
   - measured at the bottom of the reactor vessel;
- gas mixture flow rate (m³/h):
   - measured upstream from the blower-inverter
   - controlled by the frequency of the blower-inverter;
- CO₂ flow rate (m³/h) or amount (m³ or kg):
   - measured at the CO₂-tanker or CO₂-silo;
   - measured at the pipeline to the upper; region of the reactor vessel;
   - measured at the pipeline to the bottom region, i.e. bottom third of the reactor vessel;
- opening of the control valves (%):
   - at a pipeline to the bottom of the reactor vessel;
   - at a pipeline to the upper region of the reactor vessel
   - optionally at different points along a pipeline positioned along the reactor vessel wall.

In figure 3, a preferred embodiment of the reactor vessel 5 or silo is illustrated. Above the reactor vessel 5, a conveyor belt 8 is shown for the introduction of freshly crushed and preferably also sieved RCA material in its respective fractions 11a, 11b, 11c, 11d into the reactor vessel or silo 5. The carbonated RCA, i.e. CCA, is removed from the silo 5 at the bottom through an outlet 5b and transferred to a concrete production plant 6 located in close proximity of the reactor vessel 5 via a conveyor belt 8. A tank truck 20 filled with liquid CO₂ 21 is depicted, from which liquid CO₂ is fed (if necessary via a vaporizer) into a line comprising a first flow meter 22a. The CO₂ then either is guided into a pipeline 33 which is directed into the upper region of the silo 5, via a first control valve and a third flow meter 22c, preferably for the pre-filling of the silo 5 with CO₂ before the RCA is filled into the silo 5. CO₂ can also be directed through a pipeline 33 leading into the bottom of the reactor vessel 5 for injection of CO₂ later during the carbonation process. In addition or as an alternative, the CO₂ can be injected into the reactor vessel 5 from various points along a pipeline, which optionally can be spirally wound along the reactor vessel wall, in order to ensure uniform availability of CO₂.

After completion of phase 1 of the inventive carbonation process, the gas mixture in the reactor vessel is dried in order to reach an optimal relative humidity for phase 2 of the carbonation process. In a preferred embodiment of the invention, in order to adjust the relative humidity and the flow rate of the gas mixture 21a in the silo 5, gas mixture from the upper region of the silo 5 is deviated into a pipeline 33 and preferably guided through a fan/blower 25. The flow of the gas mixture 21a exiting the silo 5 is measured by a flow meter 22d after exiting the reactor vessel 5 and prior to entering the blower, in order to allow for adjustment of the flow rate, if necessary. The gas mixture 21a exiting the blower is then guided through a dehumidifier or dryer 26, preferably an adsorption dryer, or alternatively, a condensation dryer, or a cyclone dryer as depicted in figure 3, if the measured moisture content or humidity exceeds the desired range. If no drying is necessary, the gas bypasses the dryer 26. Water, the by-product of this drying step, is collected in a separate container 27. The dry or dried gas mixture 30 is re-introduced by injection from the bottom of the silo 5. The amount or fraction of gas mixture 21a extracted from the silo which is supposed to be guided through the dryer 26 and thus also the fraction of the gas mixture 21a to bypass the dryer 26 is determined and controlled by a controller, depending on the relative humidity measured inside the reactor vessel 5. The dried and un-dried fractions are recombined prior to re-introduction into the reactor vessel 5 and their relative humidity and temperature are again measured for control purposes. The re-introduced dried gas mixture 30 can be mixed with additional "fresh" CO₂, if required, e.g. for adjustment of the temperature of the gas mixture inside the reactor vessel 5. Before re-entering the silo 5, temperature and relative humidity of the dried gas mixture 30 re-entering the silo are measured with a respective temperature sensor 28c and humidity sensor 29c. Along the CO₂ feed line at the bottom of the silo 5, a second flow meter 22b and a second control valve 23b are arranged to measure the flow rate and control the amount of CO₂ injected at the bottom of the silo 5, respectively.

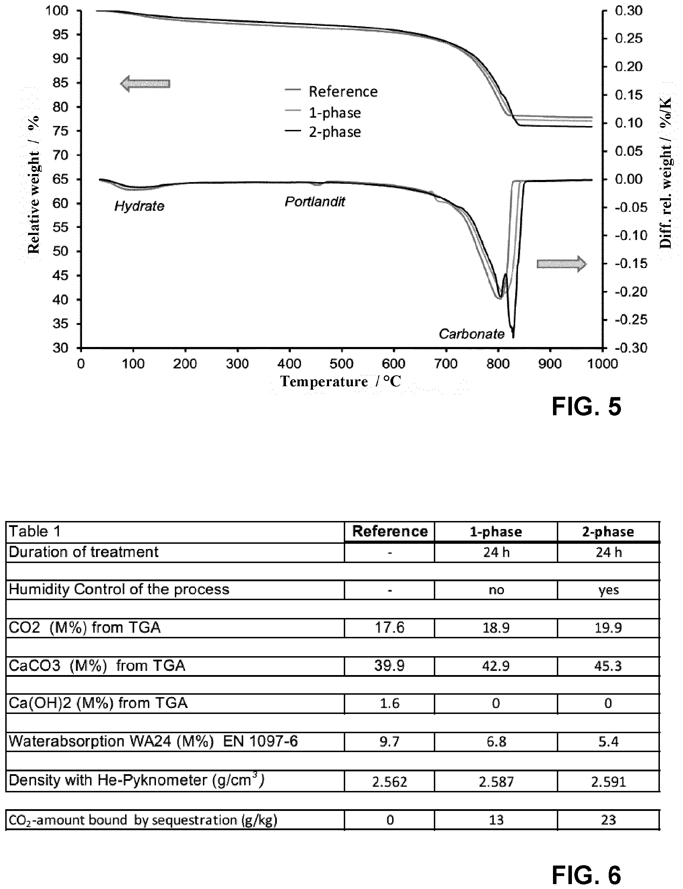

The CO₂- CaCO₃- and Ca(OH)₂ amount in the RCA was measured by quantitative Thermo Gravimetric Analysis (TGA). Figure 5 shows the graphical representation of the TGA data, from which the values shown in figure 6 were calculated. The sequestrated CO₂-amount was calculated by using an algorithm from the results of the TGA analysis as shown in Fig. 5. The results of the calculations are shown in the table illustrated in Fig. 6. After every treatment, three different samples were collected and tested using TGA, in order to determine the amount of sequestered CO₂ which characterizes the batch, i.e. for the purpose of obtaining a certificate of analysis. The table illustrated in Fig. 6 shows a comparison between i) an untreated RCA reference fraction of 0-4 mm (sand), ii) the same sand exposed to a "standard", i.e. 1-phase carbonation process for 24h, and iii) the same sand exposed to an "optimized", i.e. 2-phase carbonation process according to the invention for 24h. In this context, a "standard", i.e. 1-phase carbonation process encompasses the exposure of the aggregate to a CO₂ atmosphere without any defined control parameters or settings.

The weight loss at about 100°C shown in Fig. 5 is attributable to hydrates (C-S-H, ettringite, AFm phases). It should be taken into account that the samples were dried at 110°C, which leads to a partial dehydration of the above-mentioned phases. The difference between carbonated samples and the reference could be related to a change of the C-S-H structure caused by carbonation of the hydrates-phase.

The weight loss at 420-475°C can be assigned to the dehydration of portlandite and occurs only in the non-carbonated sample reference. The portlandite peak in the other samples is not present because during the carbonation process it has been transformed into calcite. The weight loss at 570-840°C can be attributed to the release of CO₂ from carbonate phases (mainly calcite).

The quantification of the TGA data shows that the carbonated sample no longer contains portlandite, and that the content of CaCO₃, i.e. calcite, is increased compared to the non-carbonated sample.

In the optimized, i.e. 2-phase carbonated sample, 2.3 wt% additional CO₂ (5.4% additional CaCO₃) was bound compared to the reference. The 1.6 wt% portlandite can bind 0.9 wt% CO₂, i.e. in addition to portlandite, also other phases (C-S-H, ettringite, AFm phases) are carbonated.

This proves that hydrate phases have been attacked by carbonation and the formation of silicate and aluminate gels is proven. These gels are reactive. As soon as the mixing water comes into contact with this gel, hydration takes place and new hydrate phases will be formed again. This process leads to a strength increase within the concrete structure.

The inventive 2-phase carbonation treatment has led to an increase in density of about 0.03 g/cm³, compared to the uncarbonated sample, and a small increase of 0.004 g/cm³ compared to the 1-phase carbonation treatment, which can be explained by the higher density of calcite (2.72 g/cm³) compared to that of portlandite (2.23 g/cm³), as can be seen in the table of figure 6.

The water absorption capacity was determined according to EN 1097-6 2000, the density was determined using a He-Pycnometer.

The experimental results indicate that the carbonated RCA carbonated according to the optimized 2-phase carbonation method according to the invention show an increased density and a decreased water absorption.

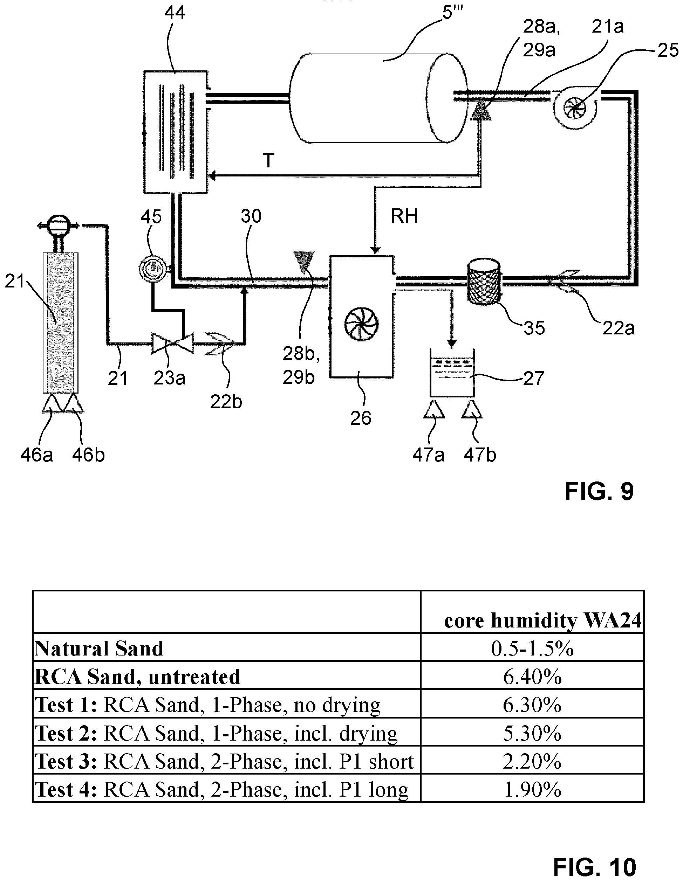

Four tests were conducted on recycled concrete material with a grain size distribution of 0-4 mm, i.e. sand. The test-set-up is shown in figure 9, and the results are shown in figures 10-13.

The tests were conducted in a revolving drum/rotating cylinder 5‴ in order to optimize the interaction of the gas and the solid particles, and thus to promote the drying process during the second reaction in phase 2 of the carbonation. The movement of the concrete material and the resulting continuous contact with the gaseous phase (CO₂) is essential for the drying out of the concrete material to be recycled and thus for the activation of phase 2 of the carbonation process, in order to provide an optimal environment for the second chemical reaction to be favored and to promote the gel-formation. In the test set-up, gas mixture 21a from within the reactor vessel 5‴ was guided through a blower 25 and through a filter 35 upstream of a dehumidifier/dryer 26. Water 27 collected during the drying process was collected in a separate container. Downstream of the dehumidifier 26, and upstream of the reactor vessel 5"', the dried gas mixture 30 passed a pressure sensor 45 and then was guided through a heater 44, which allowed temperature adjustment based on data from a second temperature sensor 28b.

The entire test set-up excluding the CO₂-source was placed on a single first scale in order to measure the rate and extent of CO₂-uptake in terms of an increase of mass, and the CO₂-source was placed on a second scale, for measurement of the reduction of mass in the source container. Temperature and relative humidity were measured by respective sensors 28a, 28b and 29a, 29b, respectively, in the depicted embodiment downstream of the reactor vessel 5‴ and upstream of the blower 25 and then downstream of the dryer.

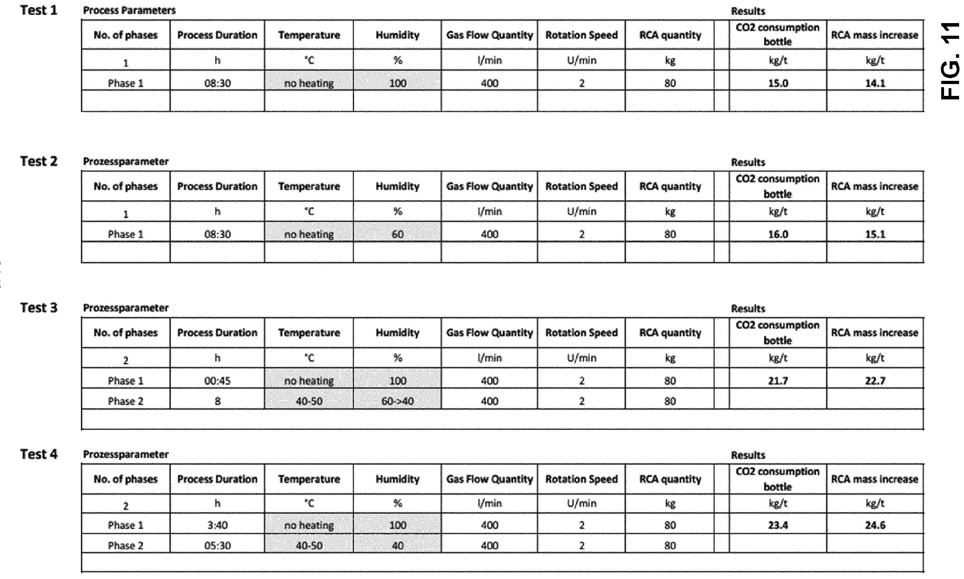

In Tests 1 and 2 only a single carbonation phase was carried out, wherein in Test 1, no temperature control and no humidity control were applied for 8h30min, i.e. substantially corresponding to a "standard(/classic" carbonation treatment according to the prior art. In Test 2, also for a duration of 8h30min, the temperature was not controlled, but a dehumidifier was installed from the beginning on, resulting in a combination of phases 1 and 2 in only one step. The gas mixture was dried with a condensation dryer set to 50-60% RH and reached about 75% RH. In Test 3, the carbonation was carried out first for only 45 minutes in an environment with 100% relative humidity, and then for 8h30min at a temperature of 50°C in the presence of a heater and under the action of a dehumidifier, wherein a relative humidity of 60% was reached, followed by a further reduction of the relative humidity of the gas mixture to 40% for one hour. This embodies a two-phase carbonation treatment, in which phase 1 is only carried out for a short period of time and stopped before CO₂-saturation is reached. In Test 4, the carbonation was carried out first for 3h45min under at 100% rel. humidity, and then for 5h30min at 50°C in the presence of a heater and under the action of a dehumidifier. The gas mixture was dried, lowering the relative humidity to 40% in test 4. In test 4, phase 1 was carried out until a saturation of CO₂-uptake was reached (verified by monitoring the change of mass of the RCA during CO₂-uptake), followed by the initiation of the drying process. The process parameters are indicated in figure 11.

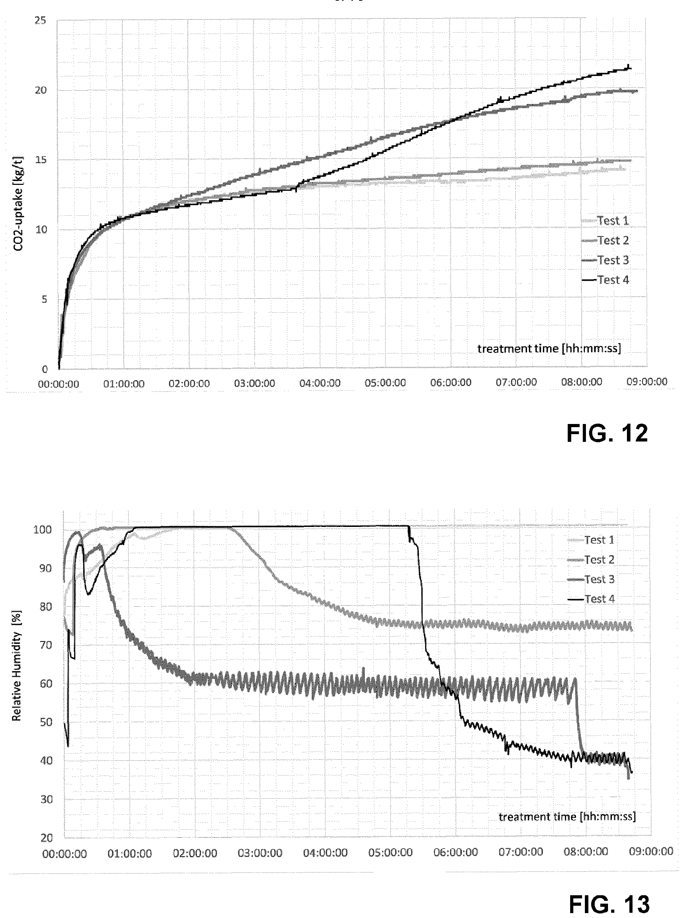

Figure 12 contains a graphic representation of the CO₂-consumption/uptake. From the point in time in which in Tests 3 and 4, respectively, phase 2 was initiated, i.e. after 45 min or 3h45min, respectively, CO₂-uptake continued. The results shown in figure 12 show that the two single-phase carbonation processes of tests Test 1 and Test 2, respectively, almost reached CO₂-saturation after 4-5 hours. Dehumidifying alone does not result in much better results than a "classic" carbonation treatment according to the prior art. Contrary thereto, in tests Test 3 and Test 4, the curves remained "open". However, the results of Test 3 show that phase 1. i.e. the humid phase, is very important and the reaction which is favored under the humid conditions must be exploited as far as possible before the second reaction is initiated in phase 2, i.e. the dry phase, in order to reach optimal results in terms of CO₂-consumption/uptake. Upon initiation of phase 2, the RCA, which at the end of phase 1 is saturated, becomes, by the change of the conditions (reduction of relative humidity and possibly increase of temperature of the RCA to an ideal range of 50-60°C) able to take up even more CO₂. Only if both reactions of carbonation are fully exploited, a maximum uptake of CO₂ into the RCA can be reached. In other words, at the end of the inventive two-phase treatment, with a two-phase carbonation process not only a higher CO₂-usage is achieved, but also an even higher potential to bind further CO₂.

In view of economic considerations (time, energy and costs), it may be more sensible to only carbonate the sand fraction having a grain size distribution of 0-4mm (particle diameter) or other individual fractions with smaller grain size distributions separately in phase 2. However, using the entire mixture, i.e. a large fraction of concrete material with a large grain size distribution of 0-32 mm in a revolving drum/rotating cylinder, a comparably large amount of CO₂ can be stored, because a slight milling occurs on the surface of especially the larger particles. On the one hand, new very fine particles which are very quickly and easily carbonated, are additionally produced from the larger grains. As a further advantage, the grain form of the various fractions keep getting rounder and better for their use in the production of new concrete. This speaks for submitting the complete mixture (i.e. all grain sizes) to phase 1 and phase 2 of the carbonation process. In such a case, in a subsequent sieving step, the complete mixture is separated into the original fractions again and prepared for their use in the production of concrete.

In Fig. 10 the results of comparative tests 1-4 are shown with respect to the water absorption capacity of natural, i.e. primary sand compared to untreated RCA sand, and to sand which has undergone a 1-phase carbonation treatment or a 2-phase carbonation treatment, respectively. The results show that RCA sand carbonated with the inventive 2-phase carbonation treatment reaches a core humidity much lower than untreated RCA sand or sand treated only according to phase 1 of carbonation. The water absorption WA24 (core humidity), i.e. water contained or absorbed in the pores of the concrete aggregates themselves, is an indicator for the water absorption capacity of the concrete granulate. A low WA24 value (according to EN 1097-6) increases the workability and enhances the spread retention of the concrete produced with said recycled carbonated RCA. The core humidity is the maximum amount of water which can be stored by absorption of a porous material having a dry surface. Fig. 12 shows a graphical representation of the CO₂-uptake for each of the tests 1-4. It is evident therein, that the highest increase in CO₂-uptake is achieved in test 4 with the two-phase treatment.

Fig. 13 shows a graphic representation of the relative humidity over time for tests 1-4. In test 3, the sudden decrease of relative humidity (RH) after 8 hours is due to a try to further lower the relative humidity, i.e. to about 40% RH from about 60% RH. However, as seen in Fig. 12, in test 3, this had no influence on the rate of the CO₂-uptake and on the overall CO₂-uptake compared to the rate at 60% RH. This shows that the overall CO₂-uptake of the RCA is greater if the material is left to carbonate at a high relative humidity (first phase) until no more significant CO₂-uptake is possible, and then drying the gas mixture in the reactor vessel directly to a preferred level of about 40% RH and then leaving it to carbonate further in a second phase at that level of reduced relative humidity.

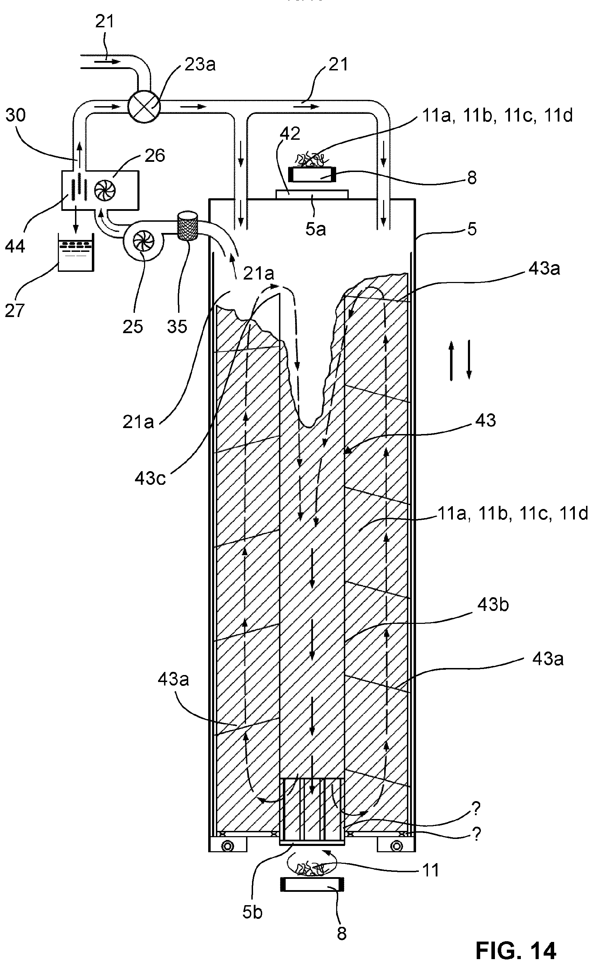

In Fig. 14, a schematic setup of a vertically disposed reactor vessel 5 according to a further preferred embodiment of the invention is shown. A flow 21 of CO₂ into the reactor vessel 5 is regulated by a valve 23a. At the top of the reactor vessel 5 is a removable lid 42 which covers an inlet 5a through which the fractions of concrete material 11a, 11b, 11c, 11d are fed from a conveyor belt 8 into the reactor vessel 5. The reactor vessel 5, comprises a mixing device 43, which in the depicted preferred embodiment comprises, along the longitudinal axis of the reactor vessel 5 a central rotating hollow shaft 43b. The central rotating hollow shaft 43b is formed as a central pipe 43b with a spiral/screw 43a attached to its surface shell. The spiral/screw 43a extends in the annular space between the surface shell/outer wall of the central pipe and the inner wall of the reactor vessel 5. Upon rotation of the central pipe 43b, the fraction of concrete material 11a, 11b, 11c, 11d is transported in an upward direction in the annular space surrounding the central pipe 43b and when reaching the top end of the central pipe 43b, the material falls over the annular top edge 43c of the central pipe 43b into the internal space of the central pipe 43b and down to the bottom of the reactor vessel 5. resulting in an internal material flow in both the upward and downward directions. In the annular space surrounding the central pipe 43b along the longitudinal axis of the reactor vessel 5, the concrete is moved/transported upward toward the top of the reactor vessel 5 again by the snail/screw 43a. The material revolution is preferably conducted 5-10 times per hour, in order to increase the exchange of the gas phase 21a inside the reactor vessel 5 with the solid particles, i.e. the fraction 11a, 11b, 11c, 11d of concrete material. Furthermore, for the purpose of carrying out phase 2 of the carbonation treatment under more dry conditions than phase 1, the gas mixture 21a from above the concrete material inside the reactor vessel 5 is deviated out of the reactor vessel 5, through a filter 35, then through a flow meter (not depicted) and then through a blower 35 and into a dehumidifier or dryer 26 containing a heater 44. Extracted water is collected in a container 27. After exiting the dehumidifier 26, the dried and optionally also heated gas mixture 30 is guided back into the reactor vessel 5, wherein fresh CO₂ can be admixed to the dried gas mixture 30 on the way back into the reactor vessel 5.

### f.) Post wetting:

The aggregate should be in equilibrium with 80-90% relative humidity before its use within a new concrete mix. This results in a stable rheology of the resulting fresh concrete during the pouring operation because the aggregate will not absorb mixing water. Absorbent RCA leads to a reduced workability of the concrete with a high risk of defect in concrete work. If the material of a carbonated fraction 11 removed from the reactor vessel 5, 5', 5", 5‴ is too dry, it can be subjected to a "post-wetting" step prior to its introduction into the concrete production plant 6, as illustrated in Fig. 2.

### g.) Production of high quality cementitious materials:

The concrete plant 6, i.e. concrete production plant, is connected to at least one silo 5, 5', 5" in which the RCA is to be treated, i.e. or where the carbonated RCA (CCA) is stored, as shown in Fig. 1, or to a rotating reactor vessel 5‴ according to Fig. 4. During the production of new concrete, all carbonated RCA fractions which are to be combined for the new concrete composition are mixed for 20 seconds with the mixing water 13. Cement 12 and additives 14, such as a plasticizer are admixed to produce new concrete composition 16. The mixing water 13 used in concrete production can be fresh water, water collected at the recycling facility, or mixtures thereof. Water from the recycling facility can for example be rainwater, washing water from the mixer trucks or other equipment, or water collected from sprinkler units used for dust reduction purposes, which can be collected and re-used for concrete production.

Cementitious materials, such as concrete or mortar, produced from carbonated RCA (CCA) material show a higher performance compared to such materials containing untreated RCA.

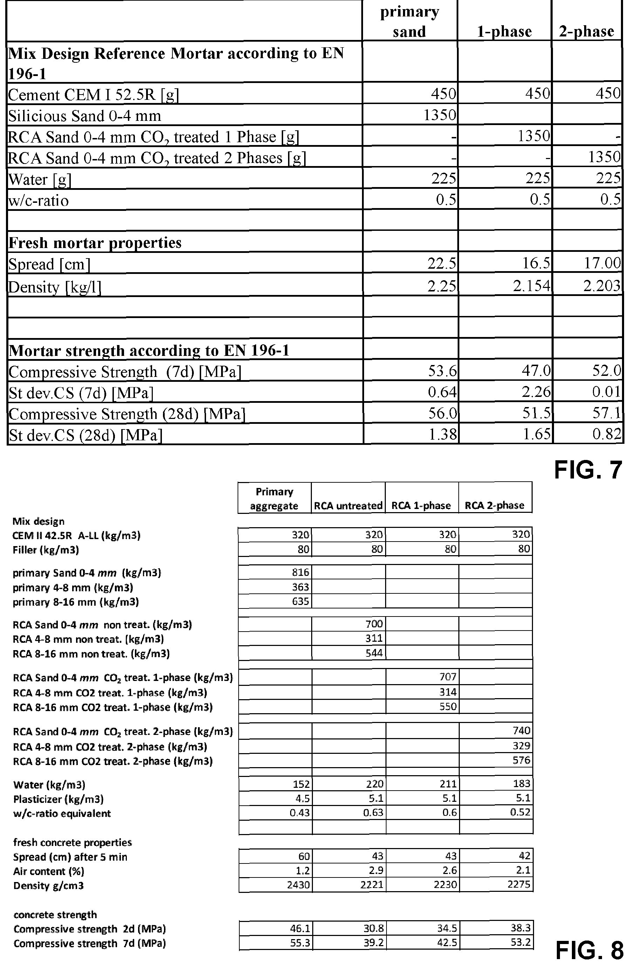

The results of a first comparative example between three mortars composed of CEM I 52.5R, 0-4 mm sand and water are illustrated in Fig. 7. The water to cement ratio (w/c) is 0.5. The first mortar contains a 0-4 mm primary siliceous sand. The second mortar contains 0-4 mm RCA sand, which however was previously carbonated only in phase 1 of the carbonation treatment, with 15 g CO₂/ kg sand bound. The third mortar contains 0-4 mm RCA sand, which was previously carbonated with phases 1 and 2 of the carbonation treatment, with 23 g CO₂/ kg sand bound. All the other parameters of the mix design remained constant. The mortar treated with the 2-phase carbonation treatment showed a slightly better workability and higher density that the mortar treated only with the first phase of carbonation treatment. In addition, the compressive strength of the mortar treated with the 2-phase-carbonation treatment was much higher than the compressive strength of the mortar treated only with the first phase of carbonation treatment. In case of the compressive strength measured after 28 days according to EN 196-1, the value even exceeded that of the primary sand. This is due to the fact than the two-phase carbonation treatment increases the reactivity of the RCA due to increased gel-formation.

The second comparative example, illustrated in Fig. 8, concerns four concrete mixes. In the first mix, primary aggregates were used. In the other three mixes, RCA was used. Thereof, in the second mix, non-carbonated sand was used, while in the third concrete mix labeled "RCA 1-phase" in the table of Fig. 8, the same 0-4 mm sand was previously treated with only phase 1 of a carbonation process according to test 1 above, and in the fourth concrete mix labeled "RCA 2-phase" in the table of Fig. 8, the same 0-4 mm sand was previously treated with phase 1 and phase 2 of the carbonation process according to test 4 above. The tables of Figures 7 and 8 summarize the numbers regarding the mix design, the fresh mortar or concrete properties, respectively, and the strength development of the samples. In this case, the workability of both the reference and the optimized mixes was kept constant.

In the first concrete mix of Fig. 8 containing primary aggregates, 152 l/m³water were added. This sample of course shows the best performance of all, including low water-to-cement (w/c) eq. values, a large spread and very good compressive strength. However, it was an aim to improve the performance of concrete samples produced with recycled material. In order to reach the same workability, in the concrete mix with the uncarbonated RCA-sand, a larger amount of water was necessary. Due to the better performance of the carbonated sand, less water was necessary in case of the two samples with carbonated RCA sand than in the sample with uncarbonated sand. It can be seen that the sample with the sand carbonated in both phase 1 and phase 2, less water was necessary. Yet, a higher density was achieved in the sample carbonated in the 2-phase carbonation process than in the sample carbonated only in phase 1. Furthermore, the compressive strength measured after 7d in the sample carbonated with the 2-phase carbonation process almost reached the compressive strength of the sample with primary aggregates.

In other words, the carbonation of the RCA sand is responsible for a smaller air content, a smaller water absorption coefficient and a higher density. As less water is necessary, more volume is available for aggregates of other fractions (such as 4-8 mm, 8-16 mm and 16-32 mm).

A stable workability during the open time of the concrete has been achieved due also to a low WA24 value (see also table in Fig. 10), i.e. to maintain the required workability over a time of 1.5 hours on a construction site so that an optimal concrete compaction can take place. The comparison of the compressive strength confirms this trend. After seven days of hardening the concrete mix with the 2-phase-carbonated RCA-sand showed compressive strength values close to the values of the reference sample with primary aggregates.

This relevant increase in strength is supported by the formation of new hydrate phases, in addition to the reduced water to cement ratio.

### h.) Building of a new construction with the RCA-concrete

Following production of the concrete by using carbonated RCA (CCA), the recycled concrete is loaded onto a concrete mixer truck 17 and transported to the construction site 7 for the construction of a new construction or building 34. On site, this "low emission" concrete is handled like a conventional concrete.

**LIST OF REFERENCE SIGNS**

| | | | |
|---|---|---|---|
| 1 | demolition site | 18 | concrete waste, blocks |
| 2 | waste processing unit | 19 | roof, shelter |
| 3 | concrete block disposal | 20 | tank-truck |
| 4 | crushing apparatus, crushing- | 21 | CO₂ |
| | and sieving unit | 21a | gas mixture |
| 5 | first reactor vessel, | 22a | first flow meter |
| | carbonation unit | 22b | second flow meter |
| 5' | second reactor vessel | 22c | third flow meter |
| 5" | third reactor vessel | 22d | fourth flow meter |
| 5'" | horizontal reactor vessel, | 23a | first control valve |
| | rotating cylinder | 23b | second control valve |
| 5a | inlet of 5 | 24a | first CO₂ sensor |
| 5a'" | inlet of 5'" | 24b | second CO₂ sensor |
| 5b | outlet of 5 | 24c | third CO₂ sensor |
| 5b' | outlet of 5' | 25 | blower-inverter, fan |
| 5b" | outlet of 5" | 26 | dryer, dehumidifier |
| 5b'" | outlet of 5'" | 27 | water from 26 |
| 6 | concrete production plant | 28a | first temperature sensor |
| 7 | construction site | 28b | second temperature sensor |
| 8 | conveyor belt | 28c | third temperature sensor |
| 9 | crushing unit, jaw crusher of 4 | 29a | first humidity sensor |
| 10 | sieving unit of 4 | 29b | second humidity sensor |
| 11 | single fraction of carbonated | 29c | third humidity sensor |
| | RCA (CCA) | 30 | dry/dried gas mixture |
| 11a | first fraction of RCA | 31 | demolition waste |
| 11b | second fraction of RCA | 32 | concrete waste material |
| 11c | third fraction of RCA | 33 | pipeline |
| 11d | fourth fraction of RCA | 34 | new construction, building |
| 12 | cement for 16 | 35 | filter |
| 13 | water for 16 | 36 | powder, dust |
| 14 | additives for 16 | 37 | support for 5'" |
| 15 | mixer | 38 | bypass |
| 16 | new concrete composition | 39 | motor |
| 17 | concrete mixer truck | 40 | nozzle |
| 41 | gear | 46b | second mass sensor of CO₂ |
| 42 | lid | 47a | first mass sensor of H₂O |
| 43 | mixing device | 47b | second mass sensor of H₂O |
| 43a | snail/screw of 43 | H | height of 5, 5', 5", 5‴ |
| 43b | rotating central hollow shaft, | L | length of 5‴ |
| | central pipe | P1 | first phase of carbonation |
| 43c | annular top edge of 43b | P2 | second phase of carbonation |
| 44 | heater | RH1 | relative humidity of 21a in P1 |
| 45 | pressure sensor | RH2 | relative humidity of 21a in P2 |
| 46a | first mass sensor of CO₂ | | |

## Claims

1. Method for recycling concrete aggregates from demolition waste (31), comprising the following steps:
a.) providing an individual fraction (11a, 11b, 11c, 11d) of concrete aggregates obtained from a demolition site (1) with a defined grain size distribution d/D selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 2/64, 4/64, 8/64, 16/64, 20/64, 22/64, 32/64, and 64/128;
b.) introducing a defined amount of CO₂ (21) into a reactor vessel (5, 5', 5", 5‴);
c.) introducing said individual fraction (11a, 11b, 11c, 11d) of concrete aggregates into the reactor vessel (5, 5', 5", 5‴);
d.) controlled carbonation of the individual fraction (11a, 11b, 11c, 11d) of concrete aggregates in the reactor vessel (5, 5', 5", 5‴) resulting in a carbonated fraction (11) of concrete aggregates, the step of carbonation comprising a first phase of carbonation (P1) and a subsequent second phase of carbonation (P2), wherein the second phase (P2) of carbonation comprises a drying process, in which a gas mixture (21a) within the reactor vessel (5, 5', 5", 5‴) is dried in order to reduce a relative humidity (RH2) of the gas mixture within the reactor vessel (5, 5', 5", 5‴) with respect to a relative humidity (RH1) of the gas mixture (21a) within the reactor vessel (5, 5', 5", 5‴) in the first phase of carbonation (P1);
e.) removal of the carbonated fraction (11) of concrete aggregates from the reactor vessel (5, 5', 5", 5‴) for subsequent use in a production of a new concrete composition (16).

2. Method according to claim 1, wherein at least a portion of the individual fraction (11a, 11b, 11c, 11d) of concrete aggregates carbonated in the first phase of carbonation (P1) is also carbonated in the second phase of carbonation (P2).

3. Method according to one of the preceding claims, wherein in the drying process of the second phase of carbonation (P2) in step d.), the gas mixture (21a) is dried by guiding it through a dehumidifier, preferably an adsorption dryer or a condensation dryer, wherein preferably in step d.) in the first phase of carbonation (P1), a relative humidity (RH1) of the gasous phase in the reactor vessel (5, 5', 5", 5‴) is adjusted to 90-100% and is preferably controlled to remain at 90-100% during the first phase of carbonation (P1), and wherein preferably in the second phase of carbonation (P2), the relative humidity (RH2) of the gaseous phase in the reactor vessel (5, 5', 5", 5‴) is reduced to 10-70%, preferably 25-50%, more preferably to 30-40%, and is preferably controlled to remain at 10-70%, preferably 25-50%, more preferably 30-40% during the second phase of carbonation (P2).

4. Method according to one of the preceding claims, wherein in the second phase of carbonation (P2), a temperature (T2) of the fraction (11a, 11b, 11c, 11d) of concrete aggregates is adjusted to 20-70°C, preferably to 50-60°C.

5. Method according to one of the preceding claims, wherein in step d.) at least during the drying process in the second phase of carbonation (P2), at least a portion of the fraction (11a, 11b, 11c, 11d) of concrete aggregates is moved inside the reactor vessel (5, 5', 5", 5‴), preferably by means of a mixing device or a lifting device, or by means of a revolving drum or a rotary cylinder (5‴).

6. Method according to one of the preceding claims, wherein prior to the first phase of the carbonation step d.), a water content in said fraction (11a, 11b, 11c, 11d) of concrete aggregates is adjusted to a desired water content for the respective fraction (11a, 11b, 11c, 11d); preferably to a water content of at the most 10%, more preferably in a range of 1-8%, most preferably in a range of 2-7%, preferably by addition of water to said fraction (11a, 11b, 11c, 11d) of concrete aggregates prior to step d.).

7. Method according to one of the preceding claims, wherein step a) comprises
f.) crushing of concrete waste material (32) from the demolition site (1), thereby obtaining crushed concrete demolition material; and
g.) preferably sieving of the crushed concrete demolition material into different well defined fractions (11a, 11b, 11c, 11d) of concrete aggregates with different grain size distributions d/D;
wherein preferably a water content of the concrete waste material (32) is adjusted prior to or during the crushing step.

8. Method according to claim 7, wherein the introduction of the fraction (11a, 11b, 11c, 11d) of concrete aggregates obtained in step a) into the reactor vessel (5, 5', 5", 5‴) in step c) is started within at the most 60 minutes, preferably within at the most 10 minutes, more preferably within at the most 5 minutes, most preferably within at the most 2 minutes of the step of crushing and/or sieving, or wherein step d.) is carried out on the respective fraction (11a, 11b, 11c, 11d) of concrete aggregates simultaneously with the step of crushing.

9. Method according to one of the preceding claims, wherein in step b.) the CO₂ (21) is introduced into the reactor vessel (5, 5', 5", 5‴) by injection, preferably in an upper third of the reactor vessel (5, 5', 5", 5‴), and/or that the CO₂ (21) is introduced into the reactor vessel (5, 5', 5", 5‴) from an inlet located in a bottom third of the reactor vessel (5, 5', 5", 5‴), wherein preferably the introduction of the CO₂ (21) is measured by at least one flow meter (22a, 22b) and controlled by at least one control valve (23a, 23b).

10. Method according to one of the preceding claims, wherein the CO₂ (21) introduced into the reactor vessel (5, 5', 5", 5‴) in step b.) is derived from a regenerative source, preferably derived from a regenerative source, preferably located at a distance of at the most 30 km from the reactor vessel (5, 5', 5", 5‴).

11. Method according to one of the preceding claims, wherein the CO₂ (21) introduced into the reactor vessel (5, 5', 5", 5‴) in step b.) is introduced in dependency of a temperature measured in the reactor vessel (5, 5', 5", 5‴), wherein the temperature preferably is measured at at least one of the following locations: in a gas mixture (21a) contained in an upper third region of the reactor vessel (5, 5', 5", 5‴), in a respective fraction (11a, 11b, 11c, 11d) of concrete aggregates contained in the reactor vessel (5, 5', 5", 5‴), and in a dried gas mixture (30) contained in a pipeline downstream of a dryer arranged in connection with the reactor vessel (5, 5', 5", 5‴) prior to re-entering the reactor vessel (5, 5', 5", 5‴).

12. Method according to one of the preceding claims, wherein the carbonation in step d) is carried out for a range of 5-36 hours, preferably of 6-24 hours, more preferably of 8-12 hours, wherein preferably the first phase of carbonation (P1) is carried out for 2-6 hours, preferably for 3-4 hours, and the second phase of carbonation (P2) is carried out for 5-12 hours, preferably 6-8 hours.

13. Method according to one of the preceding claims, wherein the carbonation in step d) is carried out in the reactor vessel (5, 5', 5", 5‴) under controlled conditions, including at least one of the following:
- temperature control, wherein a temperature of a gas mixture (21a) contained in the reactor vessel (5, 5', 5", 5‴) is measured preferably in an upper third region of the reactor vessel (5, 5', 5", 5‴), and/or within a fraction (11a, 11b, 11c, 11d) of concrete aggregates contained in the reactor vessel (5, 5', 5", 5‴); wherein the temperature of the gas mixture (21a) in the reactor vessel (5, 5', 5", 5‴) and/or within the fraction (11a, 11b, 11c, 11d) contained in the reactor vessel (5, 5', 5", 5‴) is adjusted by a temperature-dependent adjustment of the amount of CO₂ (21) introduced into the reactor vessel (5, 5', 5", 5‴), wherein preferably at least in the second phase (P2) of carbonation the maximum temperature of the fraction (11a, 11b, 11c, 11d) of concrete aggregates contained in the reactor vessel (5, 5', 5", 5‴) does not exceed 60°C, and wherein preferably at least during the second phase (P2) of carbonation, the temperature of the fraction (11a, 11b, 11c, 11d) of concrete aggregates contained in the reactor vessel (5, 5', 5", 5‴) preferably is adjusted to a range of 20-70°C, more preferably to a range of 50-60 °C;
- relative humidity control, wherein the relative humidity is measured preferably in a gas mixture (21a) in an upper third region of the reactor vessel (5, 5', 5", 5‴) and/or within the fraction (11a, 11b, 11c, 11d) of recycled concrete aggregates contained in the reactor vessel (5, 5', 5", 5‴); wherein preferably a desired relative humidity level of 90-100%, is maintained in the gas mixture (21a) in the reactor vessel (5, 5', 5", 5‴) and/or within the fraction (11a, 11b, 11c, 11d) of recycled concrete aggregates during the first phase of carbonation;
- drying of the gas mixture (21a) during the second phase of carbonation by a dehumidifier (26), preferably by an adsorption dryer; preferably to a relative humidity 10-70%, preferably 25-50%, more preferably 30-40%, wherein preferably prior to drying the gas mixture (21a) during the second phase of carbonation, the gas mixture (21a) is filtered upstream of the dehumidifier;
- control of a gas circulation and/or material revolution, wherein a flow rate in m³/h of the gas mixture (21a) in the reactor vessel (5, 5', 5", 5‴) is measured and, if necessary, adjusted, preferably by a blower-inverter (25) or fan, wherein preferably the flow rate of the gas mixture (21a) during the carbonation treatment is at least 1 time the total reactor vessel volume per hour, and more preferably ranges from 5-120 times the total reactor vessel volume, wherein the gas flow rate most preferably lies in the range of 10-50 times the total reactor vessel volume per hour;
- control of a CO₂-concentration in % in the reactor vessel (5, 5', 5", 5‴), wherein preferably the CO₂-concentration is in the range of 70-100%, preferably more than 90%, wherein preferably the CO₂-concentration is measured in an upper third of the reactor vessel (5, 5', 5", 5‴), and/or at one third and/or at two thirds of a total height (H) of the reactor vessel (5, 5', 5", 5‴) when measured from the bottom of the reactor vessel (5, 5', 5", 5‴), or in the bottom third of the reactor vessel (5, 5', 5", 5‴), wherein preferably the fraction (11) of recycled carbonated concrete aggregates is removed from the reactor vessel (5, 5', 5", 5‴) when the CO₂ concentration in the gas mixture (21a) within the reactor vessel (5, 5', 5", 5‴) falls below 1% or when the amount of CO₂-consumption over time falls under 1kg CO₂ per ton of RCA per hour;
- control of a CO₂-flow rate in m³/h or CO₂ amount in m³ or kg, preferably at a location of at least one of the following: at an outlet of a CO₂-tanker (20), at a pipeline (33) in an upper region of the reactor vessel (5, 5', 5", 5‴), at a pipeline (33) in a lower third region or at a bottom of the reactor vessel (5, 5', 5", 5‴), wherein preferably the flow rate of the CO₂ in m³/h is at least 1 time, more preferably at least 5 times the total volume of the reactor vessel (5, 5', 5", 5‴) per hour;
- control of degree of opening of control valves (23a, 23b) in %, preferably at a pipeline (33) directed into a lower region or bottom of the reactor vessel (5, 5', 5", 5‴) and/or at a pipeline (33) directed to an upper region of the reactor vessel (5, 5', 5", 5‴).

14. Method according to one of the preceding claims, wherein in step b.), the CO₂ is introduced into the reactor vessel (5, 5', 5", 5‴) in a direction opposite to the direction of introduction of the fraction (11a, 11b, 11c, 11d) of concrete aggregates to be carbonated, wherein preferably the CO₂ (21) is introduced at a first end of the reactor vessel (5, 5', 5", 5‴) and the fraction (11a, 11b, 11c, 11d) of concrete aggregates to be carbonated is introduced at a second end of the reactor vessel (5, 5', 5", 5‴).

15. Fraction (11) of demolition waste derived, carbonated, recycled concrete aggregates, produced by the method according to one of the preceding claims, with a defined grain size distribution d/D selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 8/64, 16/64, 20/64, 22/64, 32/64, and 64/128, wherein the fraction (11) of carbonated recycled concrete aggregates have a CO₂-content of 5-55 kg/t.

16. Method for producing a concrete composition (16) from demolition waste (31) derived concrete aggregates, comprising in addition to the steps a.) - e.) of claim 1 and the crushing step f.) of claim 7, at least one, and preferably both of the following steps:
h.) prior to the crushing step, storage of demolition waste (31) derived concrete material (32) under a shelter (19) for drying purposes;
i.) after step e), and prior to an introduction of the fraction (11) of carbonated concrete aggregates into a concrete production plant (6) for production of the new concrete composition (16), wetting/humidifying the fraction (11) of carbonated concrete aggregates to a desired water content.

17. Concrete composition (16) produced from recycled demolition waste derived concreted aggregates, comprising cement (12), preferably a Portland limestone cement or a Portland composite cement, or a composite cement, a filler, concrete aggregates in various fractions of different grain size distributions, water (13), and a plasticizer, and/or other concrete admixtures, **characterized in that** at least 80% by weight, more preferably at least 85% by weight, most preferably at least 90% by weight of the concrete aggregates contained in the concrete composition (16) are made up of recycled concrete aggregates, wherein at least one individual fraction (11) of the recycled concrete aggregates with a defined grain size distribution d/D selected from a group consisting of 0/1, 0/2, 0/4, 1/2, 1/4, 2/4, 0/8, 1/8, 2/8, 4/8, 5.6/11.2, 0/16, 1/16, 2/16, 4/16, 8/16, 0/20, 1/20, 2/20, 4/20, 8/20, 16/20, 0/22, 1/22, 2/22, 4/22, 8/22, 16/22, 11.2/22.4, 8/31.5, 16/31.5, 0/32, 1/32, 2/32, 4/32, 8/32, 16/32, 20/32, 22/32, 0/64, 8/64, 16/64, 20/64, 22/64, 32/64, and 64/128, preferably with a defined grain size distribution d/D selected from a group consisting of 0/4, 4/8, 8/16, 0/32 and 16/32 is made up of carbonated recycled concrete aggregates, which have been carbonated according to a method according to one of claims 1-16, wherein the concrete composition (16) comprises after 28 days a compressive strength of at least 15 MPa, preferably of at least 35 MPa, more preferably of at least 30 MPa, most preferably of at least 35 MPa, and a Young's modulus of elasticity of at least 20 GPa, preferably of at least 25 GPa, more preferably of at least 30 GPa, wherein the concrete composition (16) preferably comprises a density of at least 2.3 g/cm3, and preferably a water to cement ratio of at the most 0.5.

18. Concrete composition (16) according to claim 17, **characterized in that** the amount of CO₂ (21) bound in the at least one fraction (11) of carbonated recycled concrete aggregates contained in the concrete composition (11) is in the range of 5 to 55 kg/t.

19. Facility for the recycling of concrete aggregates from demolition waste (31), comprising, preferably within a radius of at the most 1 km,
- an apparatus (4) for crushing demolition waste (31) derived concrete aggregates (32);
- preferably an apparatus for sieving crushed concrete aggregates;
- at least one reactor vessel (5, 5', 5", 5‴), for carrying out a controlled carbonation of a fraction (11a, 11b, 11c, 11d) of recycled concrete aggregates capable of binding a predetermined amount of CO₂ (21) and for receiving the fraction of a recycled concrete aggregate obtained from a demolition site with a defined grain size distribution d/D, wherein at least one reactor vessel (5, 5', 5", 5‴) comprises a mixing device (43) for moving the fraction (11a, 11b, 11c, 11d) of recycled concrete aggregates contained therein, or wherein at least one reactor vessel (5, 5', 5", 5‴) of the facility is rotatable about its longitudinal axis for the purpose of material revolution of the fraction (11a, 11b, 11c, 11d) of recycled concrete aggregates, wherein preferably the at least one reactor vessel (5, 5', 5", 5‴) of the facility which is rotatable about its longitudinal axis is a rotating cylinder or a revolving drum;
- a concrete production plant (6) for producing a new concrete composition (16) for use in a new construction (34) at a construction site (7),
- wherein preferably the apparatus (4) for crushing is connected to the at least one reactor vessel (5, 5', 5", 5‴) by at least one conveyor belt (8) for transferring a fraction (11a, 11b, 11c, 11d) of crushed recycled concrete aggregates to the reactor vessel (5, 5', 5", 5‴), and/or wherein the reactor vessel (5, 5', 5", 5‴) is connected to the concrete production plant (6) by at least one conveyor belt (8) for transferring a fraction (11) of carbonated recycled concrete aggregates to the concrete production plant (6).

20. Facility according to claim 19, **characterized in that** it further comprises a disposal site (3), in which demolition waste (31) derived blocks (18) of concrete aggregates are stored under a roof (19) for drying until a desired water content of less than 10%, preferably a water content in a range of 1-8%, more preferably of 2-7% is reached in said blocks (18), prior to introducing the demolition waste derived blocks (18) to the crushing apparatus (4).

21. Facility according to one of claims 19 to 20, further comprising an apparatus for humidifying/wetting the carbonated fraction (11) of concrete aggregates prior to introduction of the carbonated fraction (11) into the concrete production plant (6).
